# EUROPEAN PATENT SPECIFICATION

(11) **EP 2 246 534 B1**
(45) Date of publication and mention of the grant of the patent: **16.10.2013**
(21) Application number: 08869967.3
(22) Date of filing: 18.11.2008
(51) Int. Cl.: F01N 3/02, B01D 53/94, B01J 23/63, C01B 3/38, F01N 3/08, F01N 3/24, F01N 3/36, F02D 45/00, F01N 3/023, F01N 3/029, F01N 3/035, F01N 9/00

(54) **EXHAUST EMISSION CONTROL DEVICE FOR INTERNAL COMBUSTION ENGINE**
ABGASREINIGUNGSVORRICHTUNG FÜR EINEN VERBRENNUNGSMOTOR
DISPOSITIF DE RÉDUCTION D'ÉMISSIONS DE GAZ D'ÉCHAPPEMENT POUR MOTEUR À COMBUSTION INTERNE

(30) Priority: 08.01.2008 JP 2008001698; 08.01.2008 JP 2008001699; 08.01.2008 JP 2008001701
(43) Date of publication of application: 03.11.2010
(73) Proprietor: Honda Motor Co., Ltd., Minato-ku Tokyo 107-8556 (JP)
(72) Inventor: WADA, Katsuji, Wako-shi Saitama 351-0193 (JP); MOTOHASHI, Go, Wako-shi Saitama 351-0193 (JP); IWAMOTO, Jun, Wako-shi Saitama 351-0193 (JP); KOMATSU, Nobuhiro, Wako-shi Saitama 351-0193 (JP); TSUYAMA, Tomoko, Wako-shi Saitama 351-0193 (JP)
(74) Representative: Herzog, Markus
(86) International application number: PCT/JP2008/070927
(87) International publication number: WO 2009/087819

(56) References cited:
- EP-A2- 1 421 987
- WO-A1-2005/044426
- FR-A1- 2 900 196
- JP-A- 2000 213 332
- JP-A- 2002 332 827
- JP-A- 2006 105 057
- JP-A- 2006 348 886
- JP-A- 2007 009 701
- JP-A- 2007 100 572
- JP-A- 2007 182 849
- US-A1- 2003 200 742
- US-A1- 2005 011 184
- US-A1- 2007 044 454
- US-A1- 2008 000 221

## Description

### TECHNICAL FIELD

The present invention relates to an exhaust emission control device for an internal combustion engine. Specifically, it relates to an exhaust emission control device for an internal combustion engine having a DPF (diesel particulate filter) that collects PM (particulate matter) in the exhaust.

In addition, in the present invention, the terminology "rich" indicates a ratio of air/fuel (hereinafter referred to as "air/fuel ratio") of fuel that is smaller than a stoichiometric air/fuel ratio, and the terminology "lean" indicates an air/fuel ratio of fuel that is larger than the above stoichiometric air/fuel ratio. Moreover, in the following explanation, a mass ratio of air and fuel in a mixed gas flowing into the engine is called an engine air/fuel ratio, and a mass ratio of air and combustible gas inside exhaust plumbing is called an exhaust air/fuel ratio.

In addition, as a method for controlling the exhaust air/fuel ratio, there is a method in which the exhaust air/fuel ratio is made low (hereinafter referred to as "enriching") by reducing the intake air amount of the engine and adjusting the fuel injection (hereinafter referred to as "main injection") amount contributing to torque, and a method in which the exhaust air/fuel ratio is enriched by performing fuel injection that does not contribute to torque (hereinafter referred to as "post injection") to flow unburned fuel into the exhaust path. Moreover, alternatively, a method has also been known in which fuel is directly injected into the exhaust path (hereinafter referred to as "exhaust injection").

### BACKGROUND ART

Diesel engines, lean-burn engines, and the like have air/fuel ratios inside the cylinders that become heterogeneous, and thus PM with carbon as a main component is emitted due to combusting in a state in which oxygen is insufficient at a portion that has become locally rich. Consequently, in order to reduce the emission amount of such PM, a technique has been widely used that reduces the emission amount of PM by providing a DPF that collects PM in the exhaust to the exhaust system. Since there is a limitation to the PM amount that can be collected by this DPF, a DPF regeneration process in which the PM deposited on the DPF is caused to combust is executed as appropriate. In recent years, various proposals have been made related to techniques for this DPF regeneration process.

For example, in Patent Document 1, an exhaust emission control device is exemplified that arranges a catalytic converter coated with a catalyst having high oxidation performance in an exhaust channel on an upstream side of the DPF, and that performs exhaust injection of unburned fuel into the exhaust channel, thereby causing this fuel to combust in the catalytic converter to raise the temperature of the exhaust, and combusts PM deposited on the DPF by causing the exhaust thereby made high temperature to flow into the DPF.

In addition, in Patent Document 2, for example, an exhaust emission control device is exemplified that, by performing post injection instead of exhaust injection as described above, causes fuel to be combusted in the catalytic converter to raise the temperature of exhaust, similarly to the exhaust emission control device of Patent Document 1, and combusts PM deposited on the DPF.

Incidentally, in addition to this exhaust injection and post injection, a method has been known as a method to make the exhaust air/fuel ratio rich in which a fuel reformer that produces reducing gas containing carbon monoxide and hydrogen by way of a reforming reaction is provided to the exhaust channel. Herein, as the reforming reaction of a reforming catalyst of the fuel reformer, for example, a reaction has been known that produces a gas containing hydrogen and carbon monoxide by the partial oxidation reaction of hydrocarbons, such as that shown in formula (1) below.

CₙHₘ+1/2nO₂→nCO+1/2mH₂ (1)

This partial oxidation reaction is an exothermal reaction employing fuel and oxygen, and the reaction progresses spontaneously. As a result, upon the reaction being started, it is possible to continuously produce hydrogen without the supply of heat from outside. In addition, in this kind of partial oxidation reaction, in a case in which fuel and oxygen coexist in a high temperature state, the combustion reaction as shown in formula (2) below also progresses on the reforming catalyst.

CₙHₘ+(n+1/4m)O₂→nCO₂+1/2mH₂O (2)

As the reforming reaction, in addition to the partial oxidation reaction, the steam reforming reaction as shown in formula (3) below has also been known.

CₙHₘ+nH₂O→nCO+(n+1/2m)H₂ (3)

This steam reforming reaction is an endothermic reaction employing fuel and steam, and is not a reaction that progresses spontaneously. As a result, the steam reforming reaction is easily controlled relative to the partial oxidation reaction described above. On the other hand, it is necessary to input energy such as of a heat supply from outside.
Patent Document 1: Japanese Patent No. 3835241
Patent Document 2: Japanese Unexamined Patent Application Publication No. H8-42326

Incidentally, if the oxygen amount flowing into the DPF suddenly increases while PM is being combusted by causing exhaust of a high temperature to flow into the DPF, an oxidation reaction in the DPF may suddenly progress and the DPF may melt. Herein, as main causes for a sudden increase in the oxygen amount in the exhaust, for example, a case in which fuel injection has been interrupted (hereinafter referred to as "deceleration fuel-cut") accompanying deceleration of the vehicle, a case in which the engine transitions to idle operation, or the like can be exemplified.

In order to avoid such a situation, for example, it has been considered to consume a surge in oxygen in the catalytic converter provided upstream of the DPF by way of performing exhaust injection or post injection, as with the exhaust emission control devices exemplified in the aforementioned Patent Documents 1 and 2, thereby lowering the oxygen amount flowing into the DPF.

However, in a case of performing exhaust injection as in the exhaust emission control device of Patent Document 1, unburned fuel makes direct contact with the catalytic converter, the temperature of the catalyst surface becomes high locally, and thus the catalyst may deteriorate due to sintering or the like. In addition, when fuel contacts the catalyst in a droplet state, the temperature of the catalyst surface at the contacting portion thereof will decrease locally due to the latent heat of vaporization, and thus coking may occur. Moreover, if exhaust injection is performed in a case in which the exhaust temperature is low, the exhaust temperature will decrease further due to the latent heat of vaporization of the fuel supplied by exhaust injection, whereby liquid fuel collects in the exhaust channel, the catalyst deteriorates, and exhaust system components may corrode.

In addition, in a case of performing post injection as in the exhaust emission control device of Patent Document 2, a portion of the fuel injected adheres to the surface of the wall of the cylinders, and thus this fuel may mix into the engine oil. In such a case, not only the fuel injected not contributing to combustion of PM, but also so-called oil dilution in which engine oil is diluted by this fuel may occur.

Moreover, a majority of the reducing agent consumed by the oxidation reaction in the catalytic converter, as in the exhaust emission control device of Patent Documents 1 and 2, is hydrocarbons. Therefore, it is necessary to maintain the catalytic converter at a certain temperature at which the oxidation reaction of the hydrocarbons flowing thereinto is possible. However, in a case in which low-load operation continues or the like, the temperature of the catalytic converter will decrease to a temperature at which it is difficult for the oxidation reaction to occur, and the DPF regeneration process may not be able to be executed.

On the other hand, in a case of providing a fuel reformer in an exhaust channel, there are the following issues.

Specifically, in a case of providing the fuel reformer in an exhaust channel having an exhaust amount that regularly fluctuates as described above, it is necessary to increase the reaction time for which the reforming catalyst of the fuel reformer and the exhaust come into contact, in order to effectively produce hydrogen in this fuel reformer. However, in order to increase the reaction time as such, it is necessary to increase the size of the reforming catalyst, which may raise cost.

In addition, in order to operate the fuel reformer in a stable state, it is necessary to maintain the reaction temperature of the reforming catalyst of this fuel reformer to be constant. However, when providing a fuel reformer in an exhaust channel for which the oxygen amount, steam amount, and temperature are always fluctuating as described above, it becomes difficult to operate the fuel reformer in a stable state.

Incidentally, in addition to the aforementioned DPF, a technique has been known from the prior art in which NOx (nitrogen oxides) in exhaust is absorbed by providing a NOx purification catalyst in the exhaust system of the internal combustion engine, thereby reducing the emitted amount of NOx. On the other hand, sulfur components in the fuel and engine oil are contained in exhaust emitted from the internal combustion engine. When such sulfur components accumulate on the NOx purification catalyst, the NOx purification performance declines. Therefore, the following technique has been proposed that aims to prevent the purification performance from declining due to such poisoning of the NOx purification catalyst.

For example, an exhaust emission control device that provides a fuel reformer, which produces a reducing gas containing hydrogen, carbon monoxide, etc. by way of a reforming reaction, upstream of a NOx purification catalyst is proposed in Patent Document 3. According to this exhaust emission control device, removal of sulfur components is promoted by adding hydrogen thus produced by the fuel reformer to the exhaust when executing the SOx regeneration process of the NOx purification catalyst.

Such a SOx regeneration process of a NOx purification catalyst and a DPF regeneration process of the aforementioned DPF are basically executed separately according to the states of the NOx purification catalyst and the DPF. However, even in a case of performing either of the regeneration processes, it is necessary to cause the temperature of the exhaust system to rise. Therefore, in order to prevent the fuel economy from deteriorating, it is more preferable to execute the SOx regeneration process and the DPF regeneration process simultaneously than to execute individually.

Consequently, in Patent Document 4, for example, an exhaust emission control device has been proposed in which the NOx purification catalyst is provided downstream of the DPF, and the DPF regeneration process of the DPF and the SOx regeneration process of the NOx purification catalyst are executed simultaneously by controlling the oxygen concentration flowing into the DPF.
Patent Document 3: Japanese Patent No. 3896923
Patent Document 4: Japanese Unexamined Patent Application Publication No. 2005-133721

Incidentally, in a case of executing the SOx regeneration process of the NOx purification catalyst, it is necessary to make the exhaust air/fuel ratio flowing into this NOx purification catalyst to be less than a stoichiometric ratio. On the other hand, in a case of executing the DPF regeneration process of the DPF, it is necessary to make the exhaust air/fuel ratio flowing into the DPF to be larger than the stoichiometric ratio, thereby making an oxygen-excess atmosphere.

The exhaust emission control device illustrated in the aforementioned Patent Document 4 aims to adjust the oxygen concentration of the exhaust flowing into the NOx purification catalyst by controlling the oxygen concentration of exhaust flowing into the DPF, and to execute the DPF regeneration process and SOx regeneration process simultaneously. However, with the exhaust emission control device of Patent Document 4, when the oxygen concentration of exhaust flowing into the DPF becomes high, the exhaust air/fuel ratio flowing into the NOx purification catalyst will become large, and thus it is difficult to simultaneously execute the DPF regeneration process and the SOx regeneration process with high efficiency. As a result, the time consumed in this simultaneous process will become long, whereby fuel economy may deteriorate and the catalyst may degrade.

US 2008/000221 A1, on which the preamble of claims 1 and 2 is based, discloses an oxygen concentration sensor that detects the oxygen concentration of the exhaust between the oxidation catalyst and the filter.

US 2008/000221 A1 and US 2007/044454 A1 disclose using the reformed gas in DPF regeneration, and controlling the oxygen concentration of exhaust in order to prevent an excessive temperature rise of the DPF during regeneration.

### DISCLOSURE OF THE INVENTION

### Problems to be Solved by the Invention

As described above, with the exhaust emission control devices illustrated in Patent Documents 1 and 2 and the exhaust emission control devices provided with a fuel reformer in the exhaust channel, the efficiency of the DPF regeneration process may decline depending on the operating state of the internal combustion engine.

In addition, with the exhaust emission control device illustrated in Patent Document 4, in a case of performing the DPF regeneration process and the SOx regeneration process simultaneously, the efficiency of the processes may decline.

An object of the present invention is to provide an exhaust emission control device for an internal combustion engine that can perform a DPF regeneration process with high efficiency irrespective of the operating state of the internal combustion engine. In addition, concomitant with this, providing an exhaust emission control device for an internal combustion engine that can simultaneously execute a DPF regeneration process and SOx regeneration process with high efficiency is also made an object of the present invention.

### Means for Solving the Problems

In order to achieve the above objects, the present invention provides an exhaust emission control device for an internal combustion engine (1) in accordance with claim 1. The exhaust emission control device includes a fuel reformer (50) that is provided separately from the exhaust channel, produces a reducing gas containing hydrogen and carbon monoxide by reforming fuel, and supplies the reducing gas from an inlet (14) provided in the exhaust channel upstream of the particulate filter into the exhaust channel; a catalytic converter (31) that is provided in the exhaust channel between the inlet and the particulate filter, and continuously oxidizes the reducing gas; and a regeneration means (40) for executing a regeneration process to cause particulates collected in the particulate filter to be combusted while supplying reducing gas from the fuel reformer into the exhaust channel.

According to this configuration, the catalytic converter that continuously oxidizes reducing gas is provided in the exhaust channel between the particulate filter and the inlet at which reducing gas produced by the fuel reformer is supplied, and furthermore, the regeneration means that executes the regeneration process causing particulates to combust while supplying reducing gas into the exhaust channel is provided therein.

This enables the oxygen concentration of exhaust flowing into the particulate filter to be controlled irrespective of the operating state of the internal combustion engine, by supplying reducing gas into the exhaust channel when executing the regeneration process. As a result, even in a case in which the particulate filter may melt such as during an idle operating state or fuel-cut state described above, this can be avoided by lowering the oxygen concentration. This enables the regeneration process to be stably executed irrespective of the operating state of the internal combustion engine.

In addition, by employing such a reducing gas, the temperature of the exhaust can be raised without supplying unburned fuel such as in exhaust injection and post injection. This enables problems such as the occurrence of coking, degradation and corrosion of the catalyst and components of the exhaust channel, deterioration in fuel economy, and occurrence of oil dilution as described above to be avoided.

In addition, the molecular diameters of carbon monoxide and hydrogen contained in the reducing gas are small compared to the molecular diameters of the hydrocarbons supplied by exhaust injection and post injection. As a result, even in a case of a great amount of particulates depositing on the particulate filter, it is possible to supply reducing gas along with oxygen to deep parts thereof. This can effectively promote the combustion of particulates.

In addition, by providing the fuel reformer that supplies reducing gas to be separate from the exhaust channel, the regeneration time period of the particulate filter can be decided independently of the state of the internal combustion engine. Therefore, the regeneration process of the particulate filter can be suitable executed as needed while always controlling the internal combustion engine to an optimal state. Moreover, by providing the fuel reformer to be separate from the exhaust channel, reducing gas can always be produced at optimum efficiency and this reducing gas can be supplied into the exhaust channel, irrespective of the operating state of the internal combustion engine, oxygen concentration and steam concentration of exhaust, etc.

On the other hand, in a case of providing the fuel reformer inside the exhaust channel, it is necessary to enlarge the fuel reformer so as to be able to operate without influencing the components, temperature, and flow rate of the exhaust; however, according to this configuration, it is possible to perform operation stably without enlarging the device by providing the fuel reformer to be separate from the exhaust channel. In addition, by providing the fuel reformer to be separate from the exhaust channel, it becomes possible to activate the catalyst provided to the fuel reformer at an early stage, by performing control of an independent system from the control of the internal combustion engine.

In order to achieve the above-mentioned object, the present invention provides an exhaust emission control device for an internal combustion engine (1) in accordance with claim 2. The exhaust emission control device includes a fuel reformer (50) that is provided separately from the exhaust channel, produces a reducing gas containing hydrogen and carbon monoxide by reforming fuel, and supplies the reducing gas from an inlet (14) provided in the exhaust channel upstream of the particulate filter into the exhaust channel; and a regeneration means (40) for executing a regeneration process to cause particulates collected in the particulate filter to be combusted while supplying reducing gas from the fuel reformer into the exhaust channel. A catalyst having an oxidative function of continuously oxidizing reducing gas is supported on the particulate filter.

According to this configuration, in addition to effects similar to the above-mentioned exhaust emission control device, by supporting a catalyst having an oxidative function on the particulate filter, the exhaust emission control device can be made compact, and the combustion reaction of particulates can be further promoted. Therefore, the time from supplying reducing gas until combustion of particulates begins can be further shortened.

Preferably, the catalytic converter contains at least one selected from the group consisting of platinum, palladium, and rhodium.

According to this configuration, the catalytic converter contains at least one selected from the group consisting of platinum, palladium, and rhodium. By containing these active species, the catalytic combustion reaction such as of hydrogen, carbon monoxide, and light hydrocarbons contained in the reducing gas can be promoted.

Preferably, the catalyst having the oxidative function contains at least one selected from the group consisting of palladium, rhodium, platinum, silver, and gold.

According to this configuration, the catalyst supported on the particulate filter contains at least one selected from the group consisting of palladium, rhodium, platinum, silver, and gold. This enables effects similar to the above-mentioned exhaust emission control device to be exerted.

Preferably, the exhaust emission control device further includes an oxygen concentration detection means (23) for detecting or estimating an oxygen concentration (AF) of exhaust in the exhaust channel flowing into the particulate filter.

According to this configuration, an oxygen concentration detection means is provided for detecting the oxygen concentration of exhaust flowing into the particulate filter. This enables the oxygen concentration of exhaust flowing into the particulate filter to be controlled to a predetermined target value with good accuracy. Moreover, by controlling the oxygen concentration of exhaust flowing into the particulate filter, an excessive rise in temperature of the particulate filter during execution of the regeneration process can be prevented.

Preferably, the reducing gas produced by the fuel reformer contains more carbon monoxide than hydrogen.

According to this configuration, more carbon monoxide than hydrogen is contained in the reducing gas. Carbon monoxide combusts at a lower temperature than hydrogen. Particulates deposited on the particulate filter can be effectively combusted by supplying such a reducing gas containing carbon monoxide.

Preferably, a temperature of the reducing gas supplied by the fuel reformer is higher than a temperature of exhaust flowing through the exhaust channel at the inlet.

According to this configuration, reducing gas is supplied at a temperature higher than the temperature of exhaust flowing through the exhaust channel at the inlet. This enables the combustion of particulates to be promoted by causing the temperature of the exhaust flowing into the catalytic converter to rise.

The exhaust emission control device further includes a target concentration setting means (40) for setting an oxygen concentration target value (AFTV) of exhaust flowing into the particulate filter while executing the regeneration process by way of the regeneration means; and an oxygen concentration control means (40) for controlling the oxygen concentration (AF) of exhaust so as to match the oxygen concentration target value (AFTV) thus set by the oxygen concentration setting means, by adjusting at least one amount an intake air amount of the internal combustion engine, an exhaust recirculation ratio of the internal combustion engine, a fuel injection amount of the internal combustion engine, and a supply amount of reducing gas from the fuel reformer.

According to this configuration, while executing the regeneration process, the oxygen concentration of exhaust flowing into the particulate filter is controlled so as to match the target oxygen concentration by adjusting at least one among the intake air amount, exhaust recirculation ratio, fuel injection amount, and supply amount of reducing gas. This enables the oxygen concentration of exhaust to be made to match the target oxygen concentration with good accuracy.

Preferably, the target concentration setting means sets the oxygen concentration target value (AFTV) based on at least one among a flow rate (GE) of exhaust flowing through the exhaust channel, a temperature (TE) of the exhaust, and a deposition amount (QPM) of particulates deposited on the particulate filter.

According to this configuration, the oxygen concentration target value is set based on at least one among the flow rate of exhaust flowing through the exhaust channel, the temperature of exhaust, and the deposition amount of particulates deposited on the particulate filter. This enables the target oxygen concentration to be set so that particulates are made to combust at an adequate temperature.

The target concentration setting means, in a case of the internal combustion engine being in an idle operating state, sets the oxygen concentration target value to be low compared to a case of not being in an idle operating state.

According to this configuration, in a case of the internal combustion engine being in an idle operating state, the oxygen concentration target value is set to be low compared to a case of not being in an idle operating state. With this, even in a case in which the oxygen concentration in exhaust increases with the internal combustion engine having transitioned to an idle operating state, the oxidation reaction in the particulate filter is suppressed by setting the oxygen concentration target value to be low, and thus an excessive rise in temperature of this particulate filter can be prevented.

The target concentration setting means, in a case of the internal combustion engine being in a deceleration operating state, sets the oxygen concentration target value to be low compared to a case of not being in a deceleration operating state.

According to this configuration, in a case of the internal combustion engine being in a deceleration operating state, the oxygen concentration target value is set to be low compared to a case of not being in a deceleration operating state. With this, even in a case in which the oxygen concentration in exhaust increases with the internal combustion engine transitioning to a deceleration operating state and deceleration fuel-cut having been performed, the oxidation reaction in the particulate filter is suppressed by setting the oxygen concentration target value to be low, and thus an excessive rise in temperature of this particulate filter can be prevented.

Preferably, the fuel reformer produces reducing gas with carbon monoxide as a main component by way of a partial oxidation reaction of hydrocarbon fuel and air.

According to this configuration, this fuel reformer can be made a smaller size by producing the reducing gas by way of the partial oxidation reaction. In order words, this is because a device to continually supply extra energy from outside does not need to be provided since the partial oxidation reaction as described above is an exothermic reaction, and once the reaction starts, the reaction progresses spontaneously. In addition, there is also no need to also provide a converter and system for concentrating hydrogen of a shift reaction, etc. Moreover, the light-off time of the fuel reformer can be shortened by making the fuel reformer to be small in this way. Therefore, reducing gas can be quickly supplied into the exhaust channel as needed.

Furthermore, by introducing light hydrocarbons generated secondarily in this partial oxidation reaction to the catalytic converter along with carbon monoxide and hydrogen, it can also be used in raising the temperature of exhaust.

The exhaust emission control device for an internal combustion engine (1) includes a particulate filter (32) that is provided in an exhaust channel (4) of the internal combustion engine, and collects particulates in exhaust. The exhaust emission control device includes a regeneration means (40A) for executing a regeneration process to cause particulates collected in the particulate filter to be combusted; and a fuel reformer (50) that is provided separately from the exhaust channel, produces a reducing gas containing hydrogen and carbon monoxide by reforming fuel, and supplies the reducing gas from an inlet (14) provided in the exhaust channel upstream of the particulate filter into the exhaust channel. The regeneration means includes a normal regeneration means (40A) that executes a regeneration process without employing reducing gas produced by the fuel reformer, and a heated regeneration means (40A) that allows a regeneration process employing reducing gas produced by the fuel reformer to be executed, and switches between executing the regeneration process by way of the normal regeneration means and executing the regeneration process by way of the heated regeneration means according to a predetermined condition.

According to this configuration, when executing the regeneration process in which particulates collected in the particulate filter are caused to combust, the normal regeneration means that executes the regeneration process without employing reducing gas and the heated regeneration means that allows execution of the regeneration process employing reducing gas are switched according to predetermined conditions. Herein, molecules that easily combust such as hydrogen and carbon monoxide are contained in the reducing gas produced by the fuel reformer. Even in a state in which the exhaust temperature is low and it is difficult to cause particulates to combust, the temperature of exhaust can be quickly raised by supplying such a reducing gas to the particulate filter, for example. In addition, by switching between the normal regeneration means and heated regeneration means according to predetermined conditions, for example, a regeneration process can be executed even if it enters a state in which a regeneration process on the particulate filter would be difficult to execute by a conventional method as described above, such as in a case of immediately after engine startup or having transitioned to low-load operation. In other words, it is possible to reduce the frequency at which the operating state of the internal combustion engine enters a situation in which it is difficult to continue the regeneration process on the particulate filter, thereby forcing interruption of the regeneration process. Therefore, the time required in the regeneration process can be shortened.

In addition, by employing such a reducing gas, the temperature of exhaust can be made to rise without supplying unburned fuel as in exhaust injection and post injection. This enables problems such as the occurrence of coking, degradation and corrosion of the catalyst and components of the exhaust channel, deterioration in fuel economy, and occurrence of oil dilution as described above to be avoided.

In addition, the molecular diameters of carbon monoxide and hydrogen contained in the reducing gas are small compared to the molecular diameters of the hydrocarbons supplied by exhaust injection and post injection. As a result, even in a case of a great amount of particulates depositing on the particulate filter, it is possible to supply reducing gas along with oxygen to deep parts thereof. This can effectively promote the combustion of particulates.

In addition, by providing the fuel reformer that supplies reducing gas to be separate from the exhaust channel, the regeneration time period of particulates can be decided independently of the state of the internal combustion engine. Therefore, the regeneration process on the particulate filter can be suitable executed as needed while always controlling the internal combustion engine to an optimal state. In addition, by providing the fuel reformer to be separate from the exhaust channel, reducing gas can always be produced at optimum efficiency and this reducing gas can be supplied into the exhaust channel, irrespective of the operating state of the internal combustion engine, oxygen concentration and steam concentration of exhaust, etc.

On the other hand, in a case of providing the fuel reformer inside the exhaust channel, it is necessary to enlarge the fuel reformer so as to be able to operate without influencing the components, temperature, and flow rate of the exhaust; however, according to this configuration, it is possible to perform operation stably without enlarging the device by providing the fuel reformer to be separate from the exhaust channel. In addition, by providing the fuel reformer to be separate from the exhaust channel, it becomes possible to activate the catalyst provided to the fuel reformer at an early stage, by performing control of an independent system from the control of the internal combustion engine.

Preferably, the reducing gas produced by the fuel reformer contains more carbon monoxide than hydrogen.

According to this configuration, more carbon monoxide than hydrogen is contained in the reducing gas. Carbon monoxide combusts at a lower temperature than hydrogen. Particulates deposited on the particulate filter can be efficiently combusted by supplying such a reducing gas containing carbon monoxide.

Preferably, the catalytic converter (31) that continuously oxidizes reducing gas is provided in the exhaust channel between the inlet and the particulate filter.

According to this configuration, the reducing gas produced by the fuel reformer flows into the catalytic converter and combusts by way of this catalytic converter. By combusting reducing gas by way of the catalytic converter in this way, the temperature of exhaust is raised, and particulates deposited on the particulate filter can be efficiently combusted.

Preferably, the exhaust emission control device further includes a combustion judgment means (40A, 29D) for judging whether particulates deposited on the particulate filter are in a combusted state. The regeneration means executes the regeneration process by way of the normal regeneration means in a case of having been judged that the particulate are in a combusted state, and executes the regeneration process by way of the heated regeneration means in a case of having been judged that the particulates are not in a combusted state.

According to this configuration, in a case of having determined that the particulates deposited on the particulate filter are in a combusted state, a regeneration process not employing reducing gas is executed by way of the normal regeneration means, and in a case of having determined that the particulates are not in a combusted state, a regeneration process is executing employing reducing gas by way of the heated regeneration means. This enables the regeneration process to be efficiently executed while preventing the reducing gas from being consumed for no purpose.

Preferably, the exhaust emission control device further includes an oxygen concentration detection means for detecting or estimating an oxygen concentration of exhaust in the exhaust channel on a downstream side of the particulate filter. The combustion judgment means judges whether the particulates are in a combusted state based on the oxygen concentration thus detected or estimated by the oxygen concentration detection means.

According to this configuration, it is determined whether the particulates are in a combusted state based on the oxygen concentration on a downstream side of the particulate filter. This enables the combusted state of particulates to be determined with good accuracy.

Preferably, the exhaust emission control device further includes a downstream exhaust temperature detection means (29D) for detecting or estimating an exhaust temperature (TD) in the exhaust channel on a downstream side of the particulate filter. The combustion judgment means judges whether the particulates are in a combusted state based on the exhaust temperature (TD) thus detected or estimated by the downstream exhaust temperature detection means.

According to this configuration, it is determined whether the particulates are in a combusted state based on the exhaust temperature on a downstream side of the particulate filter. This enables the combusted state of particulates to be determined with good accuracy.

Preferably, the heated regeneration means reduces the intake air amount (GE) of the internal combustion engine, increases the exhaust recirculation ratio of the internal combustion engine, or sets the charge efficiency of the internal combustion engine to be small, compared to a case of performing the regeneration process by way of the normal regeneration means.

According to this configuration, in a case of executing the regeneration process by way of the heated regeneration means, the intake air amount of the internal combustion engine is reduced, the exhaust recirculation ratio of the internal combustion engine is increased, or the charge efficiency of the internal combustion engine is set to be small, compared to a case of executing the regeneration process by way of the normal regeneration means. By executing the regeneration process by way of such a heated regeneration means, the temperature of the particulate filter can be quickly raised.

Preferably, the heated regeneration means includes a first heated regeneration means (40A) for executing a regeneration process while supplying reducing gas from the fuel reformer into the exhaust channel, and a second heated regeneration means (40A) for executing a regeneration process without supplying reducing gas from the fuel reformer into the exhaust channel, and switches between executing the regeneration process by way of the first heated regeneration means and executing the regeneration process by way of the second heated regeneration means according to a predetermined condition.

According to this configuration, a first heated regeneration means for executing a regeneration process while supplying reducing gas and a second heated regeneration means for executing a regeneration process without supplying reducing gas are provided to the heated regeneration means, and the first heated regeneration means and the second regeneration means are switched according to predetermined conditions. This enables the regeneration process to be appropriately executed according to the conditions.

Preferably, the exhaust emission control device further includes an upstream exhaust temperature detection means (29U) for detecting or estimating a temperature (TU) of exhaust in the exhaust channel on an upstream side of the particulate filter. The heated regeneration means executes the regeneration process by way of the first heated regeneration means in a case of the temperature (TU) thus detected by the upstream exhaust temperature detection means being lower than a predetermined judgment value (TCTH).

According to this configuration, in a case in which the exhaust temperature on an upstream side of the particulate filter is less than the predetermined judgment value, the regeneration process is executed by way of the first heated regeneration means while supplying reducing gas. With this, even in a state in which the exhaust temperature is low and it is difficult to cause the particulates to combust, the exhaust temperature is quickly raised, and thus combustion of the particulates can be promoted.

Preferably, the exhaust emission control device further includes a filter temperature estimation means for estimating or detecting a temperature (TDPF) of the particulate filter. The heated regeneration means executes the regeneration process by way of the first heated regeneration means in a case of the temperature (TDPF) thus estimated or detected by the filter temperature estimation means being lower than a predetermined judgment value (TDTH).

According to this configuration, in a case of the temperature of the particulate filter being lower than the predetermined judgment value, the regeneration process is executed by way of the first heated regeneration means while supplying reducing gas. With this, even in a state in which the temperature of the particulate filter is low and it is difficult to cause particulates to combust, the exhaust temperature is quickly raised, and thus the combustion of the particulates can be promoted.

Preferably, the exhaust emission control device further includes a torque estimation means (40A) for estimating a generated torque (TRQ) of the internal combustion engine. The heated regeneration means executes the regeneration process by way of the first regeneration means in a case of the generated torque (TRQ) thus estimated or detected by the torque estimation means being less than a predetermined judgment value (TRQTH).

According to this configuration, in a case of the generated torque being lower than the predetermined judgment value, the regeneration process is executed by way of the first heated regeneration means while supplying reducing gas. With this, even in a state in which the internal combustion engine is in a low-load operating state and it is difficult to cause particulates to combust, the exhaust temperature is quickly raised, and thus the combustion of the particulates can be promoted.

Preferably, the torque estimation means estimates the generated torque of the internal combustion engine based on at least one among a revolution speed of the internal combustion engine, a fuel injection amount, and a fuel injection timing.

Preferably, the exhaust emission control device further includes a timing means (40A) for measuring an elapsed time (TIM) since starting up the internal combustion engine. The heated regeneration means executes the regeneration process by way of the first heated regeneration means in a case of the elapsed time (TIM) thus measured by the timing means being less than a predetermined judgment value (TIMTH).

According to this configuration, in a case of the elapsed time from starting up the internal combustion engine is less than the predetermined judgment value, the regeneration process is executed while supplying reducing gas. With this, even in a case of not being long after startup of the internal combustion engine and it being difficult to cause particulates to combust, the exhaust temperature is quickly raised, and thus the combustion of particulates can be promoted. The exhaust emission control device for an internal combustion engine (1), may include a NOx purification catalyst (33) that is provided in an exhaust channel (4,5) of the internal combustion engine and that, with an air/fuel ratio of exhaust flowing through the exhaust channel as an exhaust air/fuel ratio, adsorbs or occludes NOx in exhaust when the exhaust air/fuel ratio is made lean, and reduces the NOx adsorbed or occluded when the exhaust air fuel ratio is made rich, and a particulate filter (32) that is provided in the exhaust channel further upstream than the NOx purification catalyst, and that collects particulates in exhaust. The exhaust emission control device includes a fuel reformer (50B) that is provided separately from the exhaust channel, produces a reducing gas containing hydrogen and carbon monoxide by reforming fuel, and supplies the reducing gas from an inlet (14B) provided in the exhaust channel between the particulate filter and the NOx purification catalyst into the exhaust channel.

According to this configuration, the particulate filter is provided in the exhaust channel on an upstream side of the NOx purification catalyst, and the fuel reformer is provided that supplies reducing gas containing hydrogen and carbon monoxide from the inlet provided between this NOx purification catalyst and this particulate filter. With this, the exhaust air/fuel ratio of exhaust flowing into the NOx purification catalyst is kept low and the SOx regeneration process of the NOx purification catalyst can be executed with high efficiency by supplying reducing gas from downstream of the particulate filter, while the oxygen concentration of exhaust flowing into the particulate is kept high, and the regeneration process on the particulate filter is executed with high efficiency. In this way, according to this configuration, it is possible to execute the regeneration process on the particulate filter and the SOx regeneration process simultaneously with high efficiency. Therefore, the time required in these processes is shortened, which can improve fuel economy, whereby degradation to the particulate filter and the NOx purification catalyst can also be reduced.

In addition, by providing the fuel reformer to be separate from the exhaust channel, reducing gas can be supplied without increasing the heat capacity upstream of the NOx purification catalyst. This enables the SOx regeneration process to be executed without reducing the NOx purification performance when at low temperature such as immediately after engine startup.

Moreover, by providing the fuel reformer that produces reducing gas to be separate from the exhaust channel, the execution time period of the SOx regeneration process can be decided independently of the state of the internal combustion engine. Therefore, the SOx regeneration process can be suitable executed as needed while always controlling the internal combustion engine to an optimal state. In addition, by providing the fuel reformer to be separate from the exhaust channel, reducing gas can always be produced at optimum efficiency and this reducing gas can be supplied into the exhaust channel, irrespective of the operating state of the internal combustion engine, the oxygen concentration or steam concentration of the exhaust, etc.

On the other hand, in a case of providing the fuel reformer inside the exhaust channel, it is necessary to enlarge the fuel reformer so as to be able to operate without influencing the components, temperature, and flow rate of the exhaust; however, according to this configuration, it is possible to perform operation stably without enlarging the device by providing the fuel reformer to be separate from the exhaust channel. In addition, by providing the fuel reformer to be separate from the exhaust channel, it becomes possible to activate the catalyst provided to the fuel reformer at an early stage by performing control of an independent system from the control of the internal combustion engine.

Preferably, the reducing gas produced by the fuel reformer is at a pressure higher than atmospheric pressure, and contains more carbon monoxide than hydrogen by volume ratio.

According to this configuration, more carbon monoxide than hydrogen is contained in the reducing gas by volume ratio. Moreover, the temperature at which carbon monoxide begins to combust on the catalyst is a temperature lower than the temperature at which hydrogen begins to combust. The NOx purification catalyst is quickly raised in temperature by supplying such a reducing gas containing carbon monoxide, and thus the purification of SOx can be promoted in the SOx regeneration process. In addition, reducing gas thus produced can be supplied into the exhaust channel without adding an extra device by producing reducing gas of a pressure higher than atmospheric.

Preferably, a temperature of the reducing gas supplied by the fuel reformer is higher than a temperature of exhaust flowing through the exhaust channel at the inlet.

According to this configuration, reducing gas of a temperature higher than the temperature of exhaust flowing through the exhaust channel at the inlet is supplied. This enables the NOx purification catalyst to be quickly raised in temperature, and thus the purification of SOx to be promoted in the SOx regeneration process.

Preferably, oxygen is contained in the exhaust flowing through the exhaust channel when reducing gas from the fuel reformer is introduced into the exhaust channel.

Preferably, the exhaust emission control device further includes: a regeneration means (40B) for selectively executing a normal regeneration operation that raises the particulate filter in temperature to cause particulates collected in the particulate filter to combust, and a simultaneous regeneration operation that supplies reducing gas from the fuel reformer into the exhaust channel while executing the normal regeneration operation to purify SOx adsorbed to the NOx purification catalyst according to a predetermined condition.

According to this configuration, the normal regeneration operation that performs the regeneration process on the particulate filter and the simultaneous regeneration operation that supplies reducing gas and performs the SOx regeneration process while executing this normal regeneration operation are selectively executed according to predetermined conditions. This enables these regeneration processes to be efficiently executed while minimizing consumption of reducing gas, by executing the normal regeneration operation in a case of only performing the regeneration process on the particulate filter being necessary, and executing the simultaneous operation process in a case in which performing the regeneration process on the particulate filter and the SOx regeneration process simultaneously is preferable.

Preferably, the exhaust emission control device further includes an exhaust temperature control means (40B) for controlling a temperature of exhaust when executing the normal regeneration operation by adjusting at least one among an intake air amount and boost pressure.

According to this configuration, the temperature of the exhaust is controlled by adjusting at least one among the intake air amount and the boost pressure when executing the normal regeneration operation. This enables the temperature of the exhaust to be controlled to a required temperature in order for the particulates to be made to combust, and the regeneration process on the particulate filter to be performed efficiently.

Preferably, a catalytic converter (31) having an oxidative function is provided in the exhaust channel on an upstream side of the particulate filter. The regeneration means executes post injection when executing the normal regeneration operation.

According to this configuration, when providing the catalytic converter having an oxidative function on an upstream side of the particulate filter, post injection is executed while executing the normal regeneration operation. With this, the temperature of the exhaust flowing into the particulate filter can be raised and thus the regeneration process on the particulate filter can be performed with high efficiency, by causing fuel supplied by way of post injection to combust by way of the catalytic converter.

Preferably, a catalyst having an oxidative function is supported on the particulate filter. The regeneration means executes post injection when executing the normal regeneration operation.

According to this configuration, when the catalyst having an oxidative function is made to be supported on the particulate filter, post injection is executed while executing the normal regeneration operation. Therefore, by causing fuel supplied by post injection to combust by way of the catalytic converter when executing the normal regeneration operation, the temperature of the exhaust flowing into the particulate filter is raised, and thus the regeneration process on the particulate filter can be executed with high efficiency. In addition, the exhaust emission control device can be made compact, and the combustion reaction of particulates can be further promoted, compared to a case of providing the catalytic converter and the particulate filter separately. This enables the efficiency of the regeneration process on the particulate filter to be further improved.

Preferably, the exhaust emission control device further includes a particulate deposition amount estimation means (40B, 27) for estimating or detecting a particulate deposition amount (QPM) of the particulate filter. The regeneration means executes the normal regeneration operation or the simultaneous regeneration operation in response to the particulate deposition amount (QPM) thus estimated or detected by the particulate deposition amount estimation means having become at least a predetermined first estimation judgment value (QPMATH).

According to this configuration, in a case of the particulate deposition amount having become at least the first deposition judgment value, the normal regeneration operation or the simultaneous regeneration operation is executed. This enables the regeneration process on the particulate filter to be executed at a suitable opportunity prior to the deposition amount of particulates reaching the limit.

Preferably, the exhaust emission control device further includes a catalyst temperature estimation means (40B, 26B) for estimating or detecting a temperature (TLNC) of the NOx purification catalyst; and a SOx poisoning amount estimation means (40B, 28) for estimating or detecting a SOx poisoning amount (QSO) of the NOx purification catalyst. The regeneration means executes the simultaneous regeneration operation in response to the temperature (TLNC) thus estimated or detected by the catalyst temperature estimation means being at least a predetermined temperature judgment value (TLNCTH), and the SOx poisoning amount (QSO) thus estimated or detected by the SOx poisoning amount estimation means having become at least a predetermined first poisoning judgment value (QSOATH).

According to this configuration, the simultaneous regeneration operation is executed in response to the temperature of the NOx purification catalyst being at least the predetermined temperature judgment value and the SOx poisoning amount of the NOx purification catalyst having become at least the first poisoning judgment value. This enables the SOx regeneration process to be performed at an opportunity before the NOx purification performance of the NOx purification catalyst declines drastically. Furthermore, SOx desorbed from the NOx purification catalyst can be purified with good efficiency by executing the simultaneous regeneration operation in a case in which the temperature of the NOx purification catalyst is at least the predetermined temperature judgment value.

Preferably, the regeneration means ends execution of the simultaneous regeneration operation and executes the normal regeneration operation, in response to the SOx poisoning amount (QSO) estimated or detected by the SOx poisoning amount estimation means having become smaller than a predetermined second poisoning judgment value (QSOBTH).

According to this configuration, execution of the simultaneous regeneration operation ends in response to the SOx poisoning amount having become less than the predetermined second poisoning judgment value, and the normal regeneration operation is executed. This enables execution of the simultaneous regeneration operation to end according to recovery of the NOx purification performance of the NOx purification catalyst, and the regeneration process on the particulate filter to continue.

Preferably, the exhaust emission control device further includes an oxygen concentration detection means (23B) for detecting an oxygen concentration of exhaust in the exhaust channel in a vicinity of the NOx purification catalyst; and a supply amount control means (40B) for controlling a supply amount of reducing gas supplied from the fuel reformer into the exhaust channel, according to the oxygen concentration thus detected by the oxygen concentration detection means.

According to this configuration, the supply amount of reducing gas is controlled according to the oxygen concentration in a vicinity of the NOx purification catalyst. This enables the exhaust air/fuel ratio of exhaust flowing into the NOx purification catalyst to be adjusted appropriately, and thus the efficiency of the SOx regeneration process to be further improved.

Preferably, the fuel reformer produces reducing gas by way of a partial oxidation reaction of hydrocarbon fuel and air.

According to this configuration, this fuel reformer can be made a smaller size by producing reducing gas by way of a partial oxidation reaction. In order words, this is because a device to supply extra energy from outside does not need to be provided since the partial oxidation reaction as described above is an exothermic reaction, and once the reaction starts, the reaction progresses spontaneously. In addition, there is also no need to also provide a converter and system for concentrating hydrogen of a shift reaction, etc. Moreover, the light-off time of the fuel reformer can be shortened by making the fuel reformer to be small in this way. Therefore, reducing gas can be quickly supplied into the exhaust channel as needed.

Furthermore, by introducing light hydrocarbons generated secondarily in this partial oxidation reaction to the NOx purification catalyst along with carbon monoxide and hydrogen, it can also be used in the purification of SOx.

Preferably, the internal combustion engine uses light oil as fuel, and combusts the fuel by way of compression ignition.

### BRIEF DESCRIPTION OF THE DRAWINGS

FIG. 1 is a view showing a configuration of an internal combustion engine and an exhaust emission control device thereof according to a first embodiment of the present invention;
FIG. 2 is a flowchart showing a sequence of a DPF regeneration process by an ECU according to the embodiment;
FIG. 3A is a graph showing an example of control of the DPF regeneration processing according to the embodiment;
FIG. 3B is a graph showing an example of control of the DPF regeneration process according to the embodiment;
FIG. 4 is a view showing a configuration of an internal combustion engine and an exhaust emission control device thereof according to a second embodiment of the present invention;
FIG. 5 is a flowchart showing a sequence of a DPF regeneration process by an ECU according to the embodiment;
FIG. 6 is a view showing a configuration of an internal combustion engine and an exhaust emission control device thereof according to a third embodiment of the present invention;
FIG. 7 is a flowchart showing a sequence of a regeneration process by an ECU according to the embodiment;
FIG. 8 is a graph showing a relationship between a PM deposition amount on the DPF and two threshold values used in the updating of flags; and
FIG. 9 is a graph showing a relationship between a SOx poisoning amount of the NOx purification catalyst and two threshold values used in the updating of flags.

### EXPLANATION OF REFERENCE NUMERALS

1 Engine (internal combustion engine)
4 Exhaust plumbing (exhaust channel)
5 Exhaust manifold (exhaust channel)
14 Inlet
14B Inlet
23 UEGO sensor (oxygen concentration detection means)
23B UEGO sensor (oxygen concentration detection means)
26B exhaust temperature sensor (catalyst temperature estimation means)
27 Pressure differential sensor (deposition amount estimation means)
28 NOx sensor (SOx poisoning amount estimation means)
29U Upstream temperature sensor (upstream exhaust temperature detection means)
29D Downstream temperature sensor (downstream exhaust temperature detection means)
31 Catalytic converter
32 DPF
33 NOx purification catalyst
40 Electronic control unit (regeneration means, target concentration setting means, oxygen concentration control means)
40A Electronic control unit (regeneration means, normal regeneration means, heated regeneration means, first heated regeneration means, second heated regeneration means, combustion determination means, filter temperature estimation means, torque estimation means, and timing means)
40B Electronic control unit (regeneration means, exhaust temperature control means, deposition amount estimation means, SOx poisoning amount estimation means, catalyst temperature estimation means, supply amount control means)
50 Fuel reformer
50B Fuel reformer

### PREFERRED MODE FOR CARRYING OUT THE INVENTION

### First Embodiment

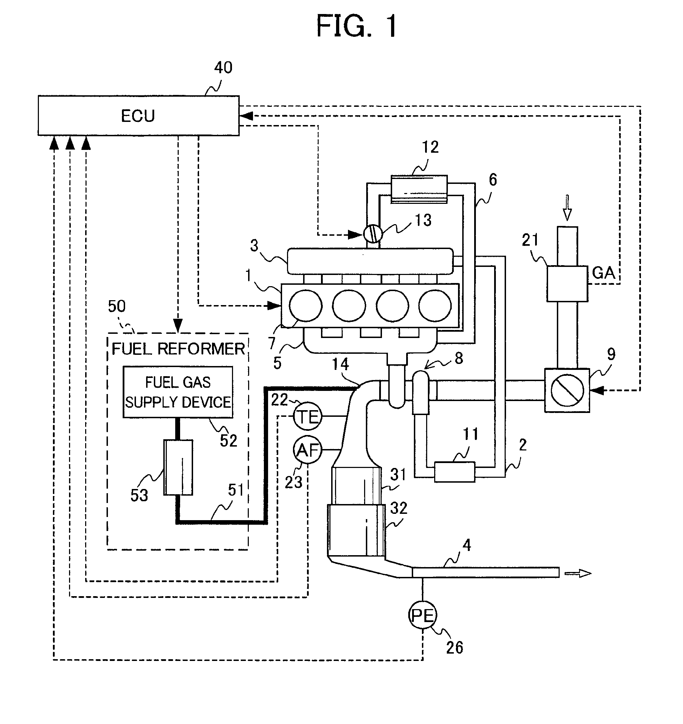

FIG. 1 is a view showing a configuration of an internal combustion engine and the exhaust emission control device thereof according to an embodiment of the present invention. An internal combustion engine (hereinafter referred to as "engine") 1 is a diesel engine that directly injects fuel into the combustion chamber of each cylinder 7 and combusts the fuel by way of compression ignition, and uses diesel oil as the fuel. In addition, a fuel injector, which is not illustrated, is provided to each cylinder 7. These fuel injectors are electrically connected to an electronic control unit (hereinafter referred to as "ECU") 40, and the valve-open duration and the valve-close duration of the fuel injectors, i.e. the fuel injection amount and fuel injection timing, are controlled by the ECU 40.

The engine 1 is provided with intake plumbing 2 in which intake air flows, exhaust plumbing 4 in which exhaust gas flows, an exhaust-gas recirculation path 6 that recirculates a portion of the exhaust in the exhaust plumbing 4 to the intake plumbing 2, and a turbocharger 8 that compresses and feeds intake air to the intake plumbing 2.

The intake plumbing 2 is connected to the intake port of each cylinder 7 of the engine 1 via a plurality of branches of an intake manifold 3. The exhaust plumbing 4 is connected to the exhaust port of each cylinder 7 of the engine 1 via a plurality of branches of an exhaust manifold 5. The exhaust-gas recirculation path 6 branches from the exhaust manifold 5 and leads to the intake manifold 3.

The turbocharger 8 includes a turbine, which is not illustrated, provided to the exhaust plumbing 4, and a compressor, which is not illustrated, provided to the intake plumbing 2. The turbine is driven by the kinetic energy of exhaust gas flowing in the exhaust plumbing 4. The compressor is rotationally driven by the turbine, and compresses and feeds intake air into the intake plumbing 2. In addition, the turbine is provided with a plurality of variable vanes, which are not illustrated, and is configured so that the turbine revolution number (revolution speed) can vary by way of causing the aperture of the variable vanes to change. The vane aperture of the turbine is electromagnetically controlled by the ECU 40.

A throttle valve 9 that controls the intake air amount GA of the engine 1 is provided inside the exhaust plumbing 2 at an upstream side of the turbocharger 8. This throttle valve 9 is connected to the ECU 40 via an actuator, and the aperture thereof is electromagnetically controlled by the ECU 40. In addition, an intercooler 11 for cooling the intake air compressed by the turbocharger 8 is provided in the intake plumbing 2 at a downstream side of the turbocharger 8.

The exhaust-gas recirculation path 6 connects the exhaust manifold 5 and the intake manifold 3, and recirculates a portion of the exhaust emitted from the engine 1. An EGR cooler 12, which cools exhaust gas that is recirculated, and an EGR valve 13 that controls the flow rate of exhaust gas being recirculated are provided in the exhaust-gas recirculation path 6. The EGR valve 13 is connected to the ECU 40 via an actuator, which is not illustrated, and the valve aperture thereof is electromagnetically controlled by the ECU 40.

A catalytic converter 31 and DPF 32 are provided from an upstream side in this order downstream of the turbocharger 8 in the exhaust plumbing 4.

The catalytic converter 31 includes a three-way catalyst that continuously oxidizes reductive gas supplied from the fuel reformer 50 described later. This catalytic converter 31 contains at least one selected from the group consisting of platinum (Pt), palladium (Pd) and rhodium (Rh) as a noble metal active species in a catalytic combustion reaction such as of carbon monoxide, hydrogen and light hydrocarbons contained in the reductive gas described below, and ceria (CeO₂), which has oxygen storage ability. By supplying reductive gas to such a catalytic converter 31, the temperature can be quickly raised even in a state in which the exhaust temperature is low. In addition, by containing ceria, stable catalyst action can be demonstrated, even under a sudden oxygen concentration fluctuation or the like.

In the present embodiment, a substance, which is prepared by producing a slurry by way of agitating and mixing 2.4 (g/L) of platinum, 1.2 (g/L) of rhodium, 6.0 (g/L) of palladium, 50 (g/L) of ceria, 150 (g/L) of alumina (Al₂O₃), and 10 of binder along with an aqueous medium in a ball mill, then after coating this slurry on a support made of Fe-Cr-Al alloy, drying and calcining this at 600°C over 2 hours, is used for the catalytic converter 31.

The DPF 32 collects, when exhaust flows through the fine pores in the filter walls, PM with elemental carbon as a main component in exhaust, by way of causing deposition thereof on the surface of the filter walls and in the pores inside the filter walls. For example, a ceramic such as silicon carbide (SiC) and a metallic madreporic body is used as a constituent material of the filter wall.

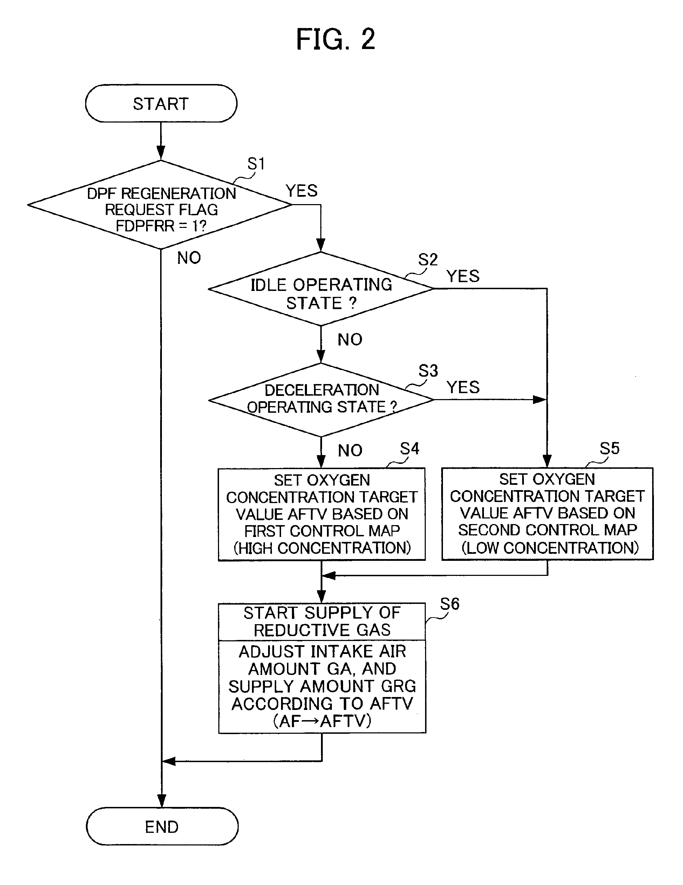

When PM is collected until the limit of the collection ability of the DPF 32, i.e. until the collection limit, since the pressure drop becomes large, it is necessary to appropriately perform the DPF regeneration process to cause the PM thus collected to combust. This DPF regeneration process is performed by raising the temperature of the exhaust flowing into the DPF 32 up to the combustion temperature of the PM collected in the DPF 32. A sequence of this DPF regeneration process is explained in detail with reference to FIG. 2 below.

In addition, a fuel reformer 50, which reforms fuel gas to produce a reformed gas containing hydrogen (H₂), and carbon monoxide (CO) is connected upstream of the catalytic converter 31 and DPF 32 inside the exhaust plumbing 4. This fuel reformer 50 supplies the reformed gas thus produced into the exhaust plumbing 4 from an inlet 14 formed upstream of the catalytic converter 31 and DPF 32 inside the exhaust plumbing 4 as reductive gas.

The fuel reformer 50 is configured to include a gas path 51 that connects one end side to the exhaust plumbing 4, a fuel gas supply device 52 that supplies fuel gas from another end side of this gas path 51, and a reforming catalyst 53 as a reforming catalyst provided in the gas path 51.

The fuel gas supply device 52 produces fuel gas by mixing fuel stored in a fuel tank and air supplied by the compressor at a predetermined ratio, and supplies this fuel gas to the gas path 51. This fuel gas supply device 52 is connected to the ECU 40, and a supply amount of fuel gas and a mixture ratio thereof are controlled by the ECU 40. In addition, it is made possible to control the supply amount GRG (amount of reducing gas supplied into the exhaust plumbing 4 per unit time) of reductive gas supplied to the exhaust plumbing 4 by controlling the supply amount of this fuel gas.

The reforming catalyst 53 contains rhodium and ceria. This reforming catalyst 53 is a catalyst that reforms the fuel gas supplied from the fuel gas supply device 52, and produces a reformed gas containing hydrogen, carbon monoxide, and hydrocarbons. More specifically, this reforming catalyst 53 produces reformed gas that is higher pressure than atmospheric pressure and contains more carbon monoxide than hydrogen by volume ratio by way of the partial oxidation reaction of hydrocarbon fuel constituting the fuel gas and air. In other words, the reformed gas contains more carbon monoxide than hydrogen. In addition, as described above, the partial oxidation reaction is an exothermal reaction. As a result, the fuel reformer 50 is able to supply into the exhaust plumbing 4 reducing gas of a temperature that is higher than the exhaust in the vicinity of the inlet 14 in the exhaust plumbing 4.

In addition, a heater (not illustrated) configured to include a glow plug, spark plug, or the like is connected to the reforming catalyst 53, whereby it is possible to heat the reforming catalyst 53 with startup of the fuel reformer 50. Moreover, the fuel reformer 50 is provided separately from the exhaust plumbing 4. In other words, the fuel gas supply device 52 and reforming catalyst 53 of the fuel reformer 50 are not provided in the exhaust plumbing 4.

An air-flow meter 21 that detects an intake air amount GA (air amount newly aspirated into the engine 1 per unit time) of the engine 1, an exhaust temperature sensor 22 that detects a temperature TE of exhaust in the exhaust plumbing 4 flowing into the catalytic converter 31 and DPF 32, a UEGO sensor 23 that detects an oxygen concentration AF of the exhaust in the exhaust plumbing 4 flowing into the catalytic converter 31 and the DPF 32, and a pressure sensor 26 that detects a pressure PE of exhaust on a downstream side of the DPF 32 in the exhaust plumbing 4 are connected to the ECU 40, and detection signals of these sensors are supplied to the ECU 40.

The ECU 40 includes an input circuit that has functions such as of shaping input signal wave forms from every kind of sensor, correcting the voltage levels to predetermined levels, and converting analog signal values to digital signal values, and a central processing unit (hereinafter referred to as "CPU"). In addition to this, the ECU 40 includes a storage circuit that stores every kind of calculation program executed by the CPU and calculation results, and an output circuit that outputs control signals to the fuel reformer 50, throttle valve 9, EGR valve 13, turbocharger 8, fuel injectors of the engine 1, and the like.

FIG. 2 is a flowchart showing a sequence of the DPF regeneration process by the ECU. As shown in FIG. 2, the DPF regeneration process makes it possible to cause PM collected in the DPF to be combusted while supplying reductive gas produced by the fuel reformer into the exhaust plumbing 4.

In Step S1, it is determined whether a DPF regeneration request flag FDPFRR is "1". In a case of this determination being YES, Step S2 is advanced to, and in a case of being NO, this process ends immediately. Herein, when the consumed amount of fuel has reached a predetermined value, or when a travelled distance of the vehicle has reached a predetermined value, this DPF regeneration request flag FDPFRR is set to "1". In addition, upon being set to "1", this DPF regeneration request flag FDPFRR is returned to "0" by way of a process not illustrated, after a predetermined regeneration time has elapsed.

In Step S2, it is determined whether the engine is in an idle operating state. In a case of this determination being YES, Step S5 is advanced to, and in a case of being NO, Step S3 is advanced to.

In Step S3, it is determined whether the engine is in a deceleration operating state. In a case of this determination being YES, Step S5 is advanced to, and in a case of being NO, Step S4 is advanced to.

In Step S4, an oxygen concentration target value AFTV of exhaust flowing into the DPF during DPF regeneration process execution is set based on a first control map, which is not illustrated, and then Step S6 is advanced to.

In Step S5, the oxygen concentration target value AFTV of exhaust flowing into the DPF during DPF regeneration process execution is set based on a second control map, which is not illustrated, and then Step S6 is advanced to.

The first control map and the second control map respectively set the target value AFTV of the oxygen concentration AF of exhaust flowing into the DPF, with at least one among a flow rate GE of exhaust flowing into the DPF, the exhaust temperature TE detected by the exhaust temperature sensor, and a PM deposition amount QPM deposited on the DPF as a parameter.

For example, in a case of including the exhaust flow rate GE as a parameter, the oxygen concentration target value AFTV is set so as to become lower as the exhaust flow rate GE decreases. In a case of including the exhaust temperature TE as a parameter, the oxygen concentration target value AFTV is set so as to become lower as the exhaust temperature TE rises. In addition, in a case of including the PM deposition amount QPM as a parameter, it is set so as to become lower as the PM deposition amount QPM increases.

Herein, if comparing the first control map and the second control map, the first control map sets the oxygen concentration target value AFTV to a concentration that is higher than the second control map. Specifically, in a case of using a parameter of the same value, the oxygen concentration target value set according to the first control map will be larger than the oxygen concentration target value set according to the second control map. In other words, in a case of being in an idle operating state or deceleration operating state, the oxygen concentration target value is set to a lower concentration.

It should be noted that, in Steps S4 and S5, the flow rate GE of exhaust flowing into the DPF is estimated based on the intake air amount GA, and the PM deposition amount QPM is estimated based on the pressure PE detected by the pressure sensor.

In Step S6, supply of reductive gas is started, and the supply amount GRG of reductive gas and the intake air amount GA are adjusted so that the oxygen concentration AF of exhaust flowing into the DPF matches the oxygen concentration target value AFTV thus set, and then this process ends.

In addition, the supply amount GRG of reductive gas and the intake air amount GA are adjusted so that the exhaust air/fuel ratio of exhaust flowing into the DPF does not fall below the stoichiometric ratio.

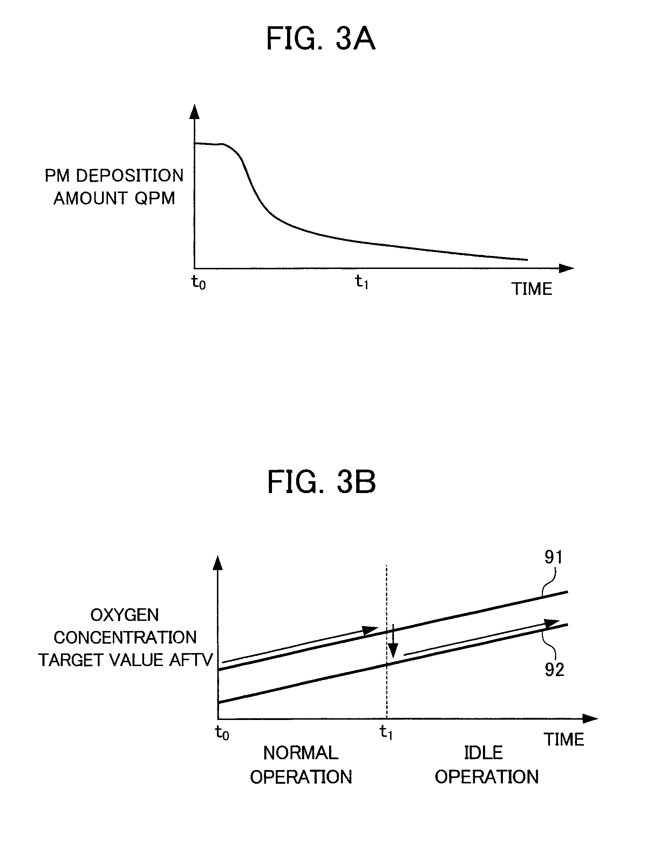

FIGS. 3A and 3B are graphs showing examples of control of the above DPF regeneration process.

FIG. 3A shows time variation of the PM deposition amount QPM. In this figure, a time t₀ is set as a DPF regeneration process start time, and the PM deposition amount QPM gradually reduces from this time t₀.

FIG. 3B is a graph showing time variation of the oxygen concentration target value AFTV. In this figure, the solid line 91 indicates the time variation of the oxygen concentration target value in a case of having been set based on the first control map, and the solid line 92 indicates the time variation of the oxygen concentration target value in a case of having been set based on the second control map. In addition, the time t₁ indicates a time at which an idle operating state was transition to from a normal operating state. As shown in FIG. 3B, the oxygen concentration target value is determined based on the first control map from when the DPF regeneration process is started at time t₀ until when the idle operating state is transitioned to at time t₁ (refer to Step S4 of FIG. 2), and the oxygen concentration target value is determined to be a lower concentration based on the second control map (refer to Step S5 of FIG. 2).

As explained in detail above, according to the present embodiment, the catalytic converter 31 that continuously oxidizes reductive gas is provided in the exhaust plumbing 4 between the DPF 32 and the inlet 14 at which reductive gas produced by the fuel reformer 50 is supplied, and a regeneration process to cause PM to be combusted is executed while supplying reductive gas into the exhaust plumbing 4.

This enables the oxygen concentration of exhaust flowing into the DPF 32 to be controlled irrespective of the operating state of the engine 1, by supplying reductive gas into the exhaust plumbing 4. As a result, even in a case in which the DPF 32 may melt such as during an idle operating state or fuel-cut state described above, this can be avoided by lowering the oxygen concentration. This enables the regeneration process to be stably executed irrespective of the operating state of the engine 1.

In addition, by employing such a reductive gas, the temperature of the exhaust can be raised without supplying unburned fuel such as in exhaust injection and post injection. This enables problems such as the occurrence of coking, degradation and corrosion of the catalyst and components of the exhaust channel, deterioration in fuel economy, and occurrence of oil dilution as described above to be avoided.

In addition, the molecular diameters of carbon monoxide and hydrogen contained in the reductive gas are small compared to the particle diameters of the hydrocarbons supplied by exhaust injection and post injection. As a result, even in a case of a great amount of PM depositing on the DPF 32, it is possible to supply reductive gas along with oxygen to deep parts thereof. This can effectively promote the combustion of PM.

In addition, by providing the fuel reformer 50 that supplies reductive gas to be separate from the exhaust plumbing 4, the DPF regeneration time period can be decided independently of the state of the engine 1. Therefore, the DPF regeneration process can be suitable executed as needed while always controlling the engine 1 to an optimal state. In addition, by providing the fuel reformer 50 to be separate from the exhaust plumbing 4, reductive gas can always be produced at optimum efficiency and this reductive gas can be supplied into the exhaust plumbing 4, irrespective of the operating state of the engine 1, oxygen concentration and steam concentration of exhaust, etc.

On the other hand, in a case of providing the fuel reformer 50 inside the exhaust plumbing 4, it is necessary to enlarge the fuel reformer so as to be able to operate without influencing the components, temperature, and flow rate of the exhaust; however, according to the present embodiment, it is possible to perform operation stably without enlarging the device by providing the fuel reformer 50 to be separate from the exhaust plumbing 4. In addition, by providing the fuel reformer 50 to be separate from the exhaust plumbing 4, it becomes possible to activate the reforming catalyst 53 provided to the fuel reformer 50 at an early stage, by performing control of an independent system from the control of the engine 1.

Furthermore, according to the present embodiment, the catalytic converter 31 contains at least one selected from the group consisting of platinum, palladium, and rhodium. By containing these active species, the catalytic combustion reaction such as of hydrogen, carbon monoxide, and light hydrocarbons contained in the reductive gas can be promoted.

In addition, according to the present embodiment, an oxygen concentration detection means is provided for detecting the oxygen concentration of exhaust flowing into the DPF 32. This enables the oxygen concentration of exhaust flowing into the DPF 32 to be controlled to a predetermined target value with good accuracy. Moreover, by controlling the oxygen concentration of exhaust flowing into the DPF 32, an excessive rise in temperature of the DPF 32 during execution of the regeneration process can be prevented.

Furthermore, according to the present embodiment, more carbon monoxide than hydrogen is contained in the reductive gas. Carbon monoxide combusts at a lower temperature than hydrogen. Particulates deposited on the particulate filter can be effectively combusted by supplying such a reducing gas containing carbon monoxide.

In addition, according to the present embodiment, reductive gas is supplied at a temperature higher than the temperature of exhaust flowing through the exhaust plumbing 4 at the inlet 14. This enables the combustion of PM to be promoted by causing the temperature of the exhaust flowing into the catalytic converter 31 to rise.

Moreover, according to the present embodiment, while executing the regeneration process, the oxygen concentration of exhaust flowing into the DPF 32 is controlled so as to match a target oxygen concentration by adjusting at least one among the intake air amount, exhaust recirculation ratio, fuel injection amount, and supply amount of reductive gas. This enables the oxygen concentration of exhaust to be made to match the target oxygen concentration with good accuracy.

In addition, according to the present embodiment, the oxygen concentration target value is set based on at least one among the flow rate of exhaust flowing through the exhaust plumbing 4, the temperature of exhaust, and the deposition amount of PM deposited on the DPF 32. This enables the target oxygen concentration to be set so that PM is made to combust at an adequate temperature.

Moreover, according to the present embodiment, in a case of the engine 1 being in an idle operating state, the oxygen concentration target value is set to be low compared to a case of not being in an idle operating state. With this, even in a case in which the oxygen concentration in exhaust increases with the engine 1 having transitioned to an idle operating state, the oxidation reaction in the DPF 32 is suppressed by setting the oxygen concentration target value to be low, and thus an excessive rise in temperature of this DPF 32 can be prevented.

In addition, according to the present embodiment, in a case of the engine 1 being in a deceleration operating state, the oxygen concentration target value is set to be low compared to a case of not being in a deceleration operating state. With this, even in a case in which the oxygen concentration in exhaust increases with the engine 1 transitioning to a deceleration operating state and deceleration fuel-cut having been performed, the oxidation reaction in the DPF 32 is suppressed by setting the oxygen concentration target value to be low, and thus an excessive rise in temperature of this DPF 32 can be prevented.

Furthermore, according to the present embodiment, this fuel reformer 50 can be made a smaller size by producing the reductive gas by way of the partial oxidation reaction. In order words, this is because a device to continually supply extra energy from outside does not need to be provided since the partial oxidation reaction as described above is an exothermic reaction, and once the reaction starts, the reaction progresses spontaneously. In addition, there is also no need to also provide a converter and system for concentrating hydrogen of a shift reaction, etc. Moreover, the light-off time of the fuel reformer 50 can be shortened by making the fuel reformer 50 to be small in this way. Therefore, reductive gas can be quickly supplied into the exhaust plumbing 4 as needed.

Furthermore, by introducing light hydrocarbons generated secondarily in this partial oxidation reaction to the catalytic converter 31 along with carbon monoxide and hydrogen, it can also be used in raising the temperature of exhaust.

According to the present embodiment, the ECU 40 configures the regeneration means, target concentration setting means, and oxygen concentration control means. More specifically, the means related to Steps S1 to S6 of FIG. 2 correspond to the regeneration means, the means related to Steps S4 and S5 correspond to the target concentration setting means, and the means related to Step S6 corresponds to the oxygen concentration control means.

It should be noted that various modifications are possible to the aforementioned embodiment.

For example, although the catalytic converter 31 having an oxidative function of continuously oxidizing reductive gas was provided in the exhaust plumbing 4 on an upstream side of the DPF 32 in the above-mentioned embodiment, it is not limited thereto. For example, a similar catalyst having an oxidative function may be supported on the DPF, without providing the catalytic converter to be separate from the DPF. In addition, in this case, it is preferable for the catalyst supported on the DPF to contain at least one selected from the group consisting of palladium, rhodium, platinum, silver, and gold.

This enables the following effects to be exerted in addition to the effects of the above-mentioned embodiment. In other words, by supporting a catalyst having an oxidative function on the DPF, the exhaust emission control device can be made compact, and the combustion reaction of PM can be further promoted. Therefore, the time from supplying reductive gas until combustion of PM begins can be further shortened.

Moreover, in the above-mentioned embodiment, although the supply amount GRG of reductive gas and the intake air amount GA are adjusted so that the oxygen concentration AF of exhaust flowing into the DPF matches the oxygen concentration target value AFTV that has been set in Step S6, it is not limited thereto. The exhaust recirculation ratio, fuel injection amount of the engine, and the like may be adjusted in addition to the supply amount GRG of reductive gas and the intake air amount GA.

### Second Embodiment

A second embodiment of the present invention is explained below while referring to the drawings. In the explanation of the second embodiment below, constitutional requirements identical to the first embodiment are assigned the same reference symbol, and explanations thereof are omitted or simplified.

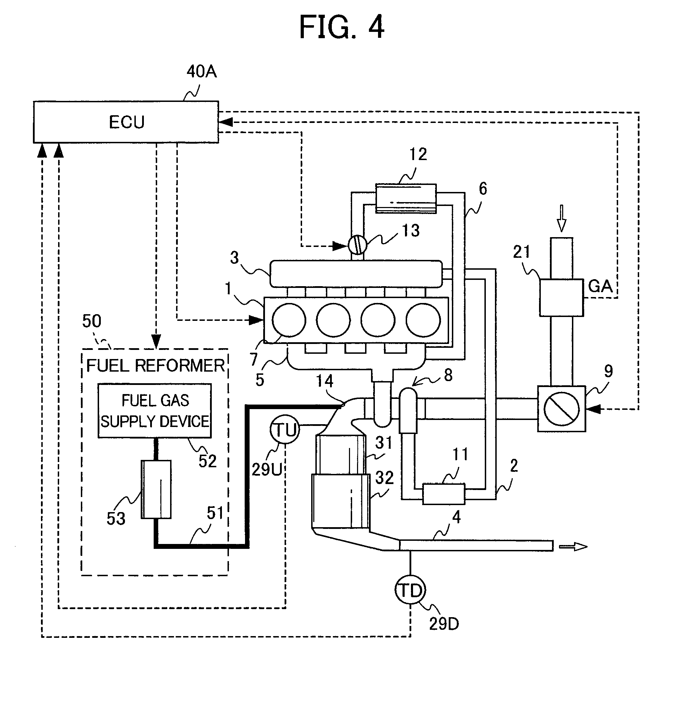

FIG. 4 is a view showing a configuration of an engine 1 and an exhaust emission control device thereof according to the second embodiment of the present invention. The second embodiment is mainly different from the first embodiment in the configuration of an ECU 40A.

An upstream temperature sensor 29U that detects an exhaust temperature TU in the exhaust plumbing 4 on an upstream side of the DPF 32 and the catalytic converter 31, and a downstream temperature sensor 29D that detects an exhaust temperature TD in the exhaust plumbing 4 on a downstream side of the DPF 32 are connected to the ECU 40A, and detection signals of these sensors are supplied to the ECU 40A.

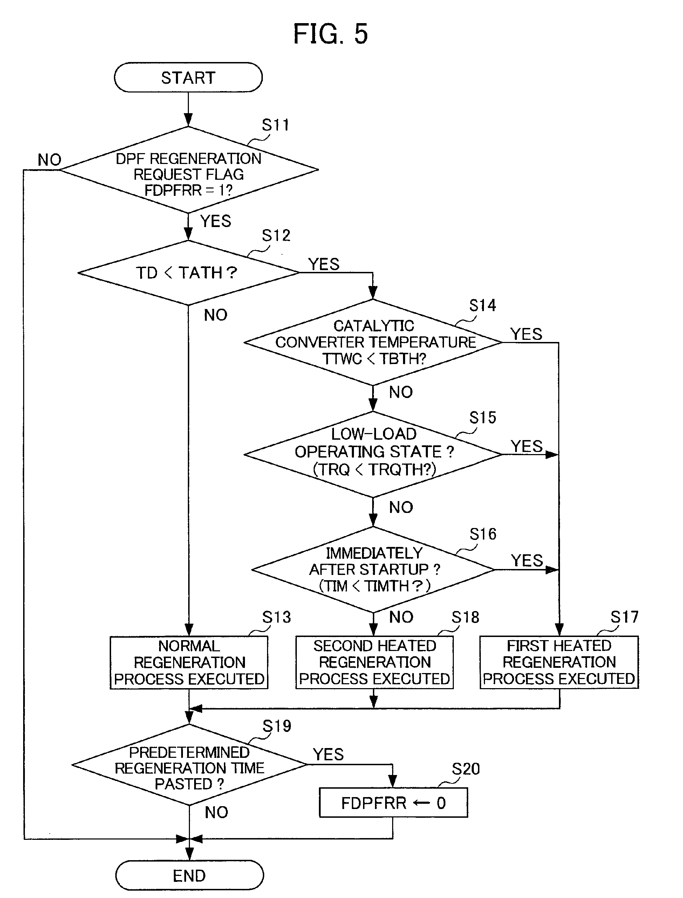

FIG. 5 is a flowchart showing a sequence of a DPF regeneration process by the ECU. As shown in FIG. 5, in the DPF regeneration process, a normal regeneration process that executes the regeneration process without employing reductive gas supplied by the fuel reformer, and a heated regeneration process that allows execution of the regeneration process employing reductive gas become switchable according to predetermined conditions. In addition, this DPF regeneration process is performed every predetermined time period, for example.

In Step S11, it is determined whether the DPF regeneration request flag FDPFRR is "1". In a case of this determination being YES, Step S12 is advanced to, an in a case of being NO, this process ends immediately. Herein, when the consumed amount of fuel has reached a predetermined value, or when a travelled distance of the vehicle has reached a predetermined value, this DPF regeneration request flag FDPFRR is set to "1".

In Step S12, it is determined whether the exhaust temperature TD on a downstream side of the DPF detected by the downstream temperature sensor is lower than a predetermined judgment temperature TATH, and in a case of this determination being YES, it is determined that the PM deposited on the DPF is not in a combusted state, and Step S14 is advanced to, whereas in a case of being NO, it is determined that PM is in a combusted state, and Step S13 is advanced to.

In Step S13, the normal regeneration process is executed, and then Step S19 is advanced to. In this normal regeneration process, for example, the temperature of exhaust is made to rise up to the combustion temperature of PM by executing post injection.

In Step S14, the temperature TTWC of the catalytic converter is estimated based on the exhaust temperature TU upstream of the catalytic converter detected by the upstream temperature sensor, it is determined whether this catalytic converter temperature TTWC is lower than a predetermined judgment temperature TBTH, and in a case of this determination being YES, Step S17 is advanced to, whereas in a case of being NO, Step S15 is advanced to.

In Step S15, it is determined whether the engine is in a low-load operating state, and in a case of this determination being YES, Step S17 is advanced to, whereas in a case of being NO, Step S16 is advanced to. More specifically, a generated torque TRQ of the engine is estimated, and it is determined whether the engine is in a low-load operating state by determining whether this generated torque TRQ is less than a predetermined torque judgment value TRQTH. In addition, in the present embodiment, the generated torque TRQ of the engine is estimated based on at least one among the revolution speed of the engine, fuel injection amount, and fuel injection timing. In Step S16, it is determined whether it is immediately after startup, and in a case of this determination being YES, Step S17 is advanced to, whereas in a case of being NO, Step S18 is advanced to. Herein, this determination as to whether being immediately after startup is performed based on whether the elapsed time TIM since startup of the engine that is measured by a timer, which is not illustrated, is less than a predetermined judgment time TIMTH.

In Step S17, execution of a first heated regeneration process is started, and then Step S19 is advanced to. In this first heated regeneration process, reductive gas produced by the fuel reformer is supplied into the exhaust plumbing along with the intake air amount GA being reduced to a predetermined amount by closing the throttle valve.

In addition, in Step S18, execution of a second heated regeneration process is started, and then Step S19 is advanced to. In this second heated regeneration step, the intake air amount GA is reduced to a predetermined amount by closing the throttle valve. Moreover, in this second heated regeneration process, supply of reductive gas is not performed.

In Step S19, it is determined whether a predetermined regeneration time has elapsed. In a case of this determination being YES, Step S20 is advanced to and this process ends after the DPF regeneration request flag is returned to "0", whereas in a case of being N0, this process ends immediately.

As described above in detail, according to the present embodiment, when executing the DPF regeneration process in which PM collected in the DPF 32 is caused to combust, the normal regeneration process that executes the regeneration process without employing reductive gas and the first and second heated regeneration processes that allow execution of the regeneration processing employing reductive gas are switched according to predetermined conditions. Herein, molecules that easily combust such as hydrogen and carbon monoxide are contained in the reductive gas produced by the fuel reformer 50. Even in a state in which the exhaust temperature is low and it is difficult to cause PM to combust, the temperature of exhaust can be quickly raised by supplying such a reductive gas to the DPF 32, for example.

In addition, by switching between the normal regeneration process and first and second heated regeneration processes according to predetermined conditions, for example, a regeneration process can be executed even if it enters a state in which a DPF regeneration process would be difficult to execute by a conventional method as described above, such as in a case of immediately after engine startup or having transitioned to low-load operation. In other words, it is possible to reduce the frequency at which the operating state of the engine enters a situation in which it is difficult to continue the DPF regeneration process, thereby forcing interruption of the regeneration process. Therefore, the time required in the regeneration process can be shortened.

In addition, by employing such a reductive gas, the temperature of exhaust can be made to rise without supplying unburned fuel as in the exhaust injection and post injection. This enables problems such as the occurrence of coking, degradation and corrosion of the catalyst and components of the exhaust channel, deterioration in fuel economy, and occurrence of oil dilution as described above to be avoided.

In addition, the molecular diameters of carbon monoxide and hydrogen contained in the reductive gas are small compared to the molecular diameters of the hydrocarbons supplied by exhaust injection and post injection. As a result, even in a case of a great amount of PM depositing on the DPF 32, it is possible to supply reductive gas along with oxygen to deep parts thereof. This can efficiently promote the combustion of PM.

In addition, by providing the fuel reformer 50 that supplies reductive gas to be separate from the exhaust plumbing 4, the regeneration time period of PM can be decided independently of the state of the engine 1. Therefore, the DPF regeneration process can be suitable executed as needed while always controlling the engine 1 to an optimal state. In addition, by providing the fuel reformer 50 to be separate from the exhaust plumbing 4, reductive gas can always be produced at optimum efficiency and this reductive gas can be supplied into the exhaust plumbing 4, irrespective of the operating state of the engine 1, oxygen concentration and steam concentration of exhaust, etc.

On the other hand, in a case of providing the fuel reformer 50 inside the exhaust plumbing 4, it is necessary to enlarge the fuel reformer 50 so as to be able to operate without influencing the components, temperature, and flow rate of the exhaust; however, according to the present embodiment, it is possible to perform operation stably without enlarging the device by providing the fuel reformer 50 to be separate from the exhaust plumbing 4. In addition, by providing the fuel reformer 50 to be separate from the exhaust plumbing 4, it becomes possible to activate the reforming catalyst 53 of the fuel reformer 50 at an early stage, by performing control of an independent system from the control of the engine 1.

Furthermore, according to the present embodiment, more carbon monoxide than hydrogen is contained in the reductive gas. Carbon monoxide combusts at a lower temperature than hydrogen. PM deposited on the DPF 32 can be efficiently combusted by supplying such a reductive gas containing carbon monoxide.

In addition, according to the present embodiment, the reductive gas produced by the fuel reformer 50 flows into the catalytic converter 31 and combusts by way of this catalytic converter 31. By combusting reductive gas by way of the catalytic converter 31 in this way, the temperature of exhaust is raised, and PM deposited on the DPF 32 can be efficiently combusted.

Moreover, according to the present embodiment, in a case of having determined that the PM deposited on the DPF 32 is in a combusted state, the normal regeneration process is executed, and in a case of having determined that the PM is not in a combusted state, the first heated regeneration process or the first heated regeneration process is executed. This enables the regeneration process to be efficiently executed while preventing the reductive gas from being consumed for no purpose. In addition, this enables the time required for the regeneration process to be shortened according to the operating state of the engine or the like.

Moreover, according to the present embodiment, it is determined whether the PM is in a combusted state based on the exhaust temperature on a downstream side of the DPF 32. This enables the combusted state of PM to be determined with good accuracy.

Furthermore, according to the present embodiment, in a case of executing the first or second heated regeneration process, the intake air amount of the engine 1 is reduced compared to a case of executing the normal regeneration process. As such, the temperature of the DPF 32 can be quickly raised by executing the first or second heated regeneration process.

In addition, according to the present embodiment, in a case of the temperature TTWC of the catalytic converter 31 being lower than the predetermined judgment temperature TBTH, the first heated regeneration process is executed. With this, even in a state in which the exhaust temperature is low and it is difficult to cause PM to combust, the exhaust temperature is quickly raised, and thus combustion of PM can be promoted.

In addition, according to the present embodiment, in a case of the generated torque TRQ being lower than the predetermined judgment value TRQTH, the first heated regeneration process is executed. With this, even in a state in which the engine 1 is in a low-load operating state and it is difficult to cause PM to combust, the exhaust temperature is quickly raised, and thus the combustion of PM can be promoted.

Moreover, according to the present embodiment, in a case of the elapsed time TIM from starting up the engine 1 is less than the predetermined judgment time TIMTH, the first heated regeneration process is executed. With this, even in a case of not being long after startup of the engine 1 and it being difficult to cause PM to combust, the exhaust temperature is quickly raised, and thus the combustion of PM can be promoted.

In the present embodiment, the ECU 40A configures a regeneration means, normal regeneration means, heated regeneration means, first heated regeneration means, second heated regeneration means, combustion judgment means, a portion of a filter temperature estimation means, a portion of a torque estimation means, and a timing means. More specifically, the means related to Steps S11 to S20 of FIG. 5 correspond to the regeneration means, the means related to Step S13 correspond to the normal regeneration means, the means related to Steps S17 and S18 correspond to the heated regeneration means, the means related to Step S17 correspond to the first heated regeneration means, the means related to Step S18 correspond to the second heated regeneration means, the means related to Step S12 and the downstream temperature sensor 29D correspond to the combustion judgment means, the means related to Step S15 correspond to the torque estimation means, and the means related to Step S16 correspond to the timing means.

It should be noted that various modifications are possible to the aforementioned embodiment.

For example, although the catalytic converter 31 having an oxidative function of continuously oxidizing reductive gas was provided in the exhaust plumbing 4 on an upstream side of the DPF 32 in the above-mentioned embodiment, it is not limited thereto. For example, a similar catalyst having an oxidative function may be supported on the DPF, without providing the catalytic converter to be separate from the DPF. With this, compared to a case in which the catalytic converter and the DPF are provided separately, the exhaust emission control device can be made compact, and the combustion reaction of PM can be further promoted. Therefore, the time from supplying reductive gas until combustion of PM beings can be further shortened.

Moreover, in the above-mentioned embodiment, although it was determined whether the PM deposited on the DPF is in a combusted state based on the exhaust temperature TD on a downstream side of the DPF detected by the downstream temperature sensor 29D in Step S12, it is not limited thereto. For example, an oxygen concentration detection means for detecting or estimating the oxygen concentration of exhaust on a downstream side of the DPF may be provided, and it may be determined whether the PM is in a combusted state based on the oxygen concentration detected or estimated by this oxygen concentration detection means. Effects similar to the above-mentioned embodiment can be exerted also if configured in this way.

For example, in the above-mentioned embodiment, although determination of whether to execute the first heated regeneration process or to execute the second heated regeneration process was performed based on the temperature of the catalytic converter, the operating state of the engine, and the elapsed time from beginning startup of the engine in Steps S14 to S16, it is not limited thereto. For example, in a case of the exhaust temperature TU detected by the upstream temperature sensor being lower than a predetermined judgment temperature TCTH, it may be configured so as to execute the first heated regeneration process. In addition, a filter temperature estimation means for estimating a temperature TDPF of the DPF may be provided, for example, and it may be configured so as to execute the first heated regeneration process in a case in which the DPF temperature TDPF estimated by this filter temperature estimation means is lower than a predetermined judgment temperature TDTH. Effects similar to the above-mentioned embodiment can be exerted also if configured in this way.

In addition, in the above-mentioned embodiment, although the intake air amount GA is reduced to a predetermined amount by closing the throttle valve in Step S17 and Step S18, when executing the first heated regeneration process and the second regeneration process, it is not limited thereto. These processes are not limited to reduction of the intake air amount, and it may be configuration to increase the exhaust recirculation flow rate by opening the EGR valve or to lower the charging efficiency of the engine. Effects similar to the above-mentioned embodiment can be exerted also if configured in this way.

### Third Embodiment

A third embodiment of the present invention is explained below while referring to the drawings. In the explanation of the third embodiment below, constitutional requirements identical to the first embodiment are assigned the same reference symbol, and explanations thereof are omitted or simplified.

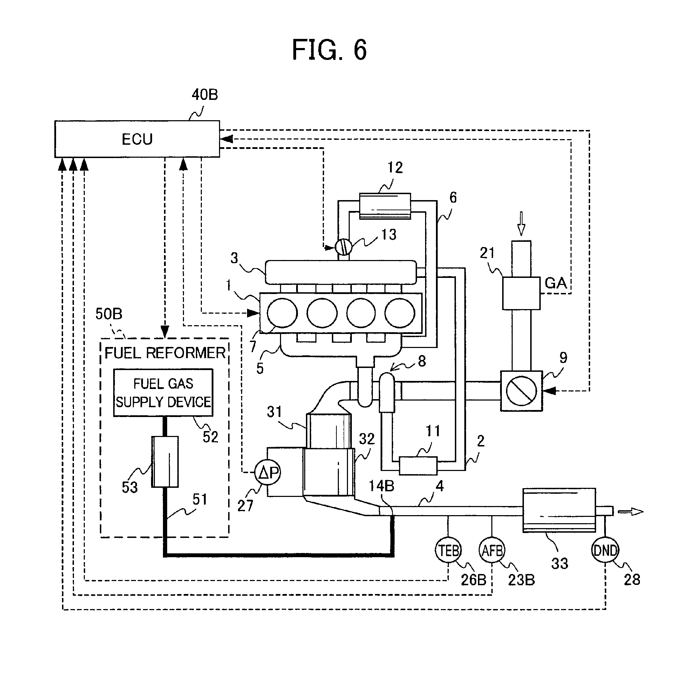

FIG. 6 is a view showing a configuration of an engine 1 and an exhaust emission control device thereof according to the third embodiment of the present invention. In addition to the configuration of the fuel reformer 50B and the configuration of the ECU 40B, the third embodiment is mainly different from the first embodiment in the aspect of providing a NOx purification catalyst 33.

The catalytic converter 31, DPF 32, and NOx purification catalyst 33 are provided in this sequence from an upstream side in the exhaust plumbing 4.

The NOx purification catalyst 33 includes platinum (Pt) that acts as a catalyst and is supported on a carrier of alumina (Al₂O₃), ceria (CeO₂), and a complex oxide of cerium and a rare earth (hereinafter referred to as "ceria-based complex oxide"), a ceria or a ceria-based complex oxide having NOx adsorption capacity, and a zeolite having a function of retaining ammonia (NH₃) generated on the catalyst as ammonium ion (NH₄⁺).

In the present embodiment, a material formed by loading a NOx reduction catalyst composed of two layers onto a catalyst support is used as the NOx purification catalyst 33.

The lower layer of the NOx reduction catalyst is formed by producing a slurry by placing a material constituted with 4.5 (g/L) of platinum, 60 (g/L) of ceria, 30 (g/L) of alumina, 60 (g/L) of Ce-Pr-La-Ox, and 20 (g/L) of Zr-Ox into a ball mill with an aqueous medium, then agitating and mixing, followed by coating this slurry on the catalyst support.

In addition, the upper layer of the NOx reduction catalyst is formed by producing a slurry by placing a material constituted with 75 (g/L) of a beta zeolite ion-exchanged with iron (Fe) and cerium (Ce), 7 (g/L) of alumina, and 8 (g/L) of a binder into a ball mill with an aqueous medium, then agitating and mixing, followed by coating this slurry on the lower layer described above.

When the amount of adsorbed ammonia of the NOx purification catalyst 33 is small, since the NOx purification ability decreases, supply of a reducing agent (hereinafter referred to as "reduction") to the NOx purification catalyst 33 is performed in order to reduce the NOx appropriately. With this reduction, the reducing agent is supplied to the NOx purification catalyst 33 by making the air/fuel ratio (engine air/fuel ratio) of the mixture inside the combustion chamber of the engine 1 to be richer than the stoichiometric ratio. In other words, by enriching the exhaust air/fuel ratio emitted from the engine 1, the concentration of reducing agent in the exhaust flowing into the NOx purification catalyst 33 becomes higher than the concentration of oxygen, thereby carrying out reduction.

Purification of NOx in this NOx purification catalyst 33 will be explained.

First, the engine air/fuel ratio is set to be leaner than stoichiometric, and when so-called lean burn operation is performed, the concentration of reducing agent in the exhaust flowing into the NOx purification catalyst 33 becomes lower than the concentration of oxygen. As a result thereof, nitrogen monoxide (NO) and oxygen (O₂) in the exhaust react by action of the catalyst, and is adsorbed to ceria or a ceria-based complex oxide as NO₂. In addition, carbon monoxide (CO) that has not reacted with oxygen is also adsorbed to ceria or the ceria-based complex oxide.

Next, so-called rich operation is performed in which the engine air/fuel ratio is set to be richer than stoichiometric, and the exhaust air/fuel ratio is enriched. In other words, when reduction to make the concentration of the reducing agent in the exhaust higher than the concentration of oxygen is carried out, carbon dioxide (CO₂) and hydrogen (H₂) are generated by carbon monoxide in the exhaust reacting with water (H₂O), and carbon monoxide (CO) and carbon dioxide (CO₂) as well as hydrogen are generated by hydrocarbons (HC) in the exhaust reacting with water. Furthermore, NOx contained in the exhaust and NOx (NO, NO₂) adsorbed to ceria or the ceria-based complex oxide (and platinum) react with the hydrogen thus generated by action of the catalyst, thereby generating ammonia (NH₃) and water. In addition, the ammonia thus generated here is adsorbed to zeolite in the form of ammonium ions (NH₄⁺).

Next, lean burn operation is performed in which the engine air/fuel ratio is set to be leaner than stoichiometric, and when the concentration of the reducing agent in the exhaust flowing into the NOx purification catalyst 33 is set to be lower than the concentration of oxygen, NOx is adsorbed to ceria or the ceria-based complex oxide. Furthermore, in a state where ammonium ions are adsorbed to the zeolite, NOx and oxygen in the exhaust react with ammonia, thereby generating nitrogen (N₂) and water.

In this way, according to the NOx purification catalyst 33, ammonia generated during reducing agent supply is adsorbed to the zeolite, and the ammonia adsorbed during lean burn operation reacts with NOx; therefore, it is possible to perform purification of NOx efficiently.

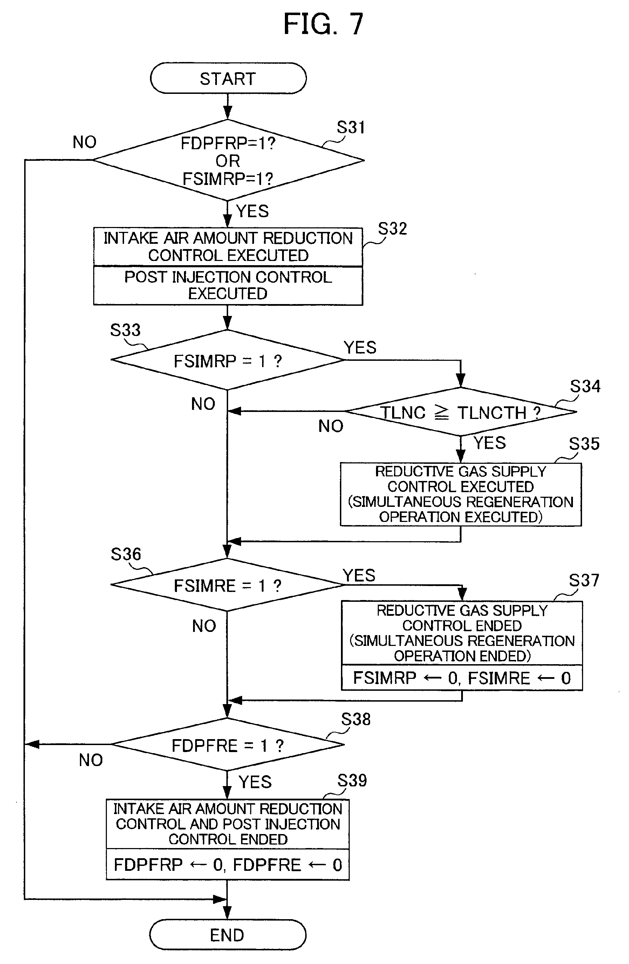

When SOx in exhaust is absorbed to the NOx purification catalyst 33, the NOx purification performance of the NOx purification catalyst 33 declines. As a result, it is necessary to perform a SOx regeneration process to purify the SOx absorbed to the NOx purification catalyst 33. More specifically, by way of the regeneration process, which is explained in detail referring to FIG. 7, the exhaust flowing into the NOx purification catalyst 33 is made a reducing atmosphere and this NOx purification catalyst 33 is raised in temperature thereby.

In the present embodiment, the fuel reformer 50B is connected in the exhaust plumbing 4 between the DPF 32 and the NOx purification catalyst 33. In other words, the reductive gas produced by the fuel reformer 50B is supplied from an inlet 14B formed in the exhaust plumbing 4 between the DPF 32 and the NOx purification catalyst 33 into the exhaust plumbing 4.

A UEGO sensor 23B that is set in a vicinity of the NOx purification catalyst 33 and detect an oxygen concentration of the exhoust in the exhoust plumbing 4 between the inlet 14 and the NOx purification catalyst 33, i.e. exhoust air/fuel ratio AFB, an exhaust temperature sensor 26B that detects a temperature TEB of exhaust in the exhaust plumbing 4 between the inlet 14B and the NOx purification catalyst 33, a differential pressure sensor 27 that detects a pressure differential ΔP between an upstream side and a downstream side of the DPF 32, and a NOx sensor 28 that detects a NOx concentration DND of exhaust in the exhaust plumbing 4 on a downstream side of the NOx purification catalyst 33 are connected to the ECU 40B, and detection signals of these sensors are supplied to the ECU 40B.

The engine 1 is normally operated by setting the engine air/fuel ratio to be leaner than the stoichiometric ratio, and in a case in which PM deposited on the DPF 32 is caused to combust or in a case in which SOx adsorbed to the NOx purification catalyst is purified, the regeneration process is performed.

The regeneration process of the present embodiment will be explained with reference to FIGS. 7 to 9.

FIG. 7 is a flowchart showing a sequence of the regeneration process by the ECU. As shown in FIG. 7, in the regeneration process of the present embodiment, the normal regeneration operation that performs a DPF regeneration process in which the DPF is raised in temperature by executing a reduction in the intake air amount and post injection, whereby PM collected on the DPF is caused to combust (Steps S32 to S39), and the simultaneous regeneration operation that performs a SOx regeneration process in which SOx adsorbed to the NOx purification catalyst is purified by supplying reductive gas while executing this normal regeneration operation (Steps S35 to S37) become selectively executable according to predetermined conditions.

In addition, in the regeneration process shown in FIG. 7, a normal regeneration execution request flag FDPFRP, a normal regeneration end request flag FDPFRE, a simultaneous regeneration execution request flag FSIMRP, and a simultaneous regeneration end request flag FSIMRE, which request the execution or end of this normal regeneration operation and simultaneous regeneration operation, are employed.

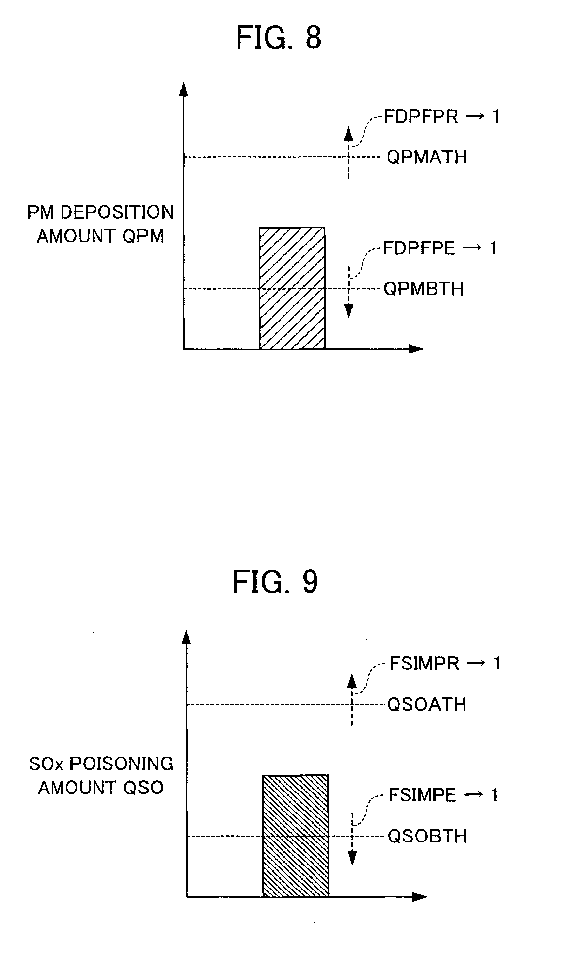

FIG. 8 is a graph showing a relationship of a deposition amount QPM of PM on the DPF with a first threshold value QPMATH and a second threshold value QPMBTH, which are used in updating the normal regeneration execution request flag FDPFRP and the normal regeneration end request flag FDPFRE. Herein, these two threshold values are set so that QPMATH>QPMBTH.

If the engine operates continuously, the PM deposition amount QPM will increase. Consequently, the normal regeneration execution request flag FDPFRP that requests execution of the normal regeneration operation is set to "1" in response to the PM deposition amount QPM having become at least the first threshold value QPMATH.

Next, if the normal regeneration operation is executed, the PM deposition amount QPM will decrease. Consequently, the normal regeneration end request flag FDPRRE that requests to end the normal regeneration operation is set to "1" in response to the PM deposition amount QPM having dropped below the second threshold value QPMBTH.

It should be noted that, in the present embodiment, the PM deposition amount QPM is estimated based on the differential pressure ΔP between an upstream side and a downstream side of the DPF detected by the differential pressure sensor.

FIG. 9 is a graph showing a relationship of a SOx poisoning amount QSO of the NOx purification catalyst with a first threshold value QSOATH and a second threshold value QSOBTH, which are used in updating the simultaneous regeneration execution request flag FSIMRP and the simultaneous regeneration end request flag FSIMRE. Herein, these two threshold values are set so that QSOATH>QSOBTH.

If the engine operates continuously, the SOx poisoning amount QPM will increase. Consequently, the simultaneous regeneration execution request flag FSIMRP that requests execution of the simultaneous regeneration operation is set to "1" in response to the SOx poisoning amount QSO having become at least the first threshold value QSOATH.

Next, if the simultaneous regeneration operation is executed, the SOx poisoning amount QSO will decrease. Consequently, the simultaneous regeneration end request flag FSIMRE that requests to end the simultaneous regeneration operation is set to "1" in response to the SOx poisoning amount QSO having dropped below the second threshold value QSOBTH.

It should be noted that, in the present embodiment, the SOx poisoning amount of the NOx purification catalyst is estimated based on the NOx concentration DND of exhaust on a downstream side of the NOx purification catalyst detected by the NOx sensor.

In addition, the normal regeneration execution request flag FDPFRP, normal regeneration end request flag FDPFRE, simultaneous regeneration execution request flag FSIMRP, and simultaneous regeneration end request flag FSIMRE are constantly updated with the PM deposition amount QPM and the SOx poisoning amount QSO by the ECU.

Referring again to FIG. 7, in Step S31, it is determined whether either of the normal regeneration execution request flag FDPFRP or the simultaneous regeneration execution request flag FSIMRP is "1". In a case of this determination being YES, Step S32 is advanced to, and in a case of being NO, this process ends immediately.

In Step S32, intake air amount reduction control and post injection control are executed, and Step S33 is advanced to. With this intake air amount reduction control, the temperature of the exhaust is controlled by adjusting the intake air amount. More specifically, the throttle valve is controlled and the intake air amount GA is reduced to a predetermined set amount, whereby the exhaust temperature is made to rise. In addition, with the post injection control, post injection is executed, with the post injection amount being adjusted to a predetermined set amount.

In Step S33, it is determined whether the simultaneous regeneration execution request flag FSIMRP is "1". In a case of this determination being YES, Step S34 is advanced to, and in a case of being NO, Step S36 is advanced to.

In Step S34, a temperature TLNC of the NOx purification catalyst is estimated based on the exhaust temperature TEB detected by the exhaust temperature sensor, and it is determined whether this catalyst temperature TLNC is at least a predetermined temperature judgment value TLNCTH. In a case of this determination being YES, Step S35 is advanced to, and in a case of being NO, Step S36 is advanced to.

In Step S35, reductive gas supply control is executed, i.e. the simultaneous regeneration operation is executed, and then Step S36 is advanced to. More specifically, the supply of reductive gas produced by the fuel reformer into the exhaust plumbing is started, with the supply amount of reductive gas being controlled based on an exhaust air/fuel ratio AFB detected by the UEGO sensor.

Herein, it is also preferable for oxygen to be contained in the exhaust flowing through this exhaust plumbing when supplying reductive gas into the exhaust plumbing.

In Step S36, it is determined whether the simultaneous regeneration end request flag FSIMRE is "1". In a case of this determination being YES, Step S37 is advanced to, and in a case of being NO, Step S38 is advanced to.

In Step S37, reductive gas supply control ends, i.e. the simultaneous regeneration operation ends, the simultaneous regeneration execution request flag FSIMRP and the simultaneous regeneration end request flag FSIMRE return to "0", and Step S38 is advanced to.

In Step S38, it is determined whether the normal regeneration end request flag FDPFRE is "1". In a case of this determination being YES, Step S39 is advanced to, and in a case of being NO, this process ends.

In Step S39, the intake air amount reduction control and post injection control end, and the normal regeneration execution request flag FDPFRP and the normal regeneration end request flag FDPFRE return to "0".

As described in detail above, according to the present embodiment, the DPF 32 was provided in the exhaust plumbing 4 on an upstream side of the NOx purification catalyst 33, and the fuel reformer 50B was provided that supplies reductive gas containing hydrogen and carbon monoxide from the inlet 14B provided between this NOx purification catalyst 33 and this DPF 32. With this, the exhaust air/fuel ratio of exhaust flowing into the NOx purification catalyst 33 is kept low and the SOx regeneration process of the NOx purification catalyst 33 can be executed with high efficiency by supplying reductive gas from downstream of the DPF 32, while the oxygen concentration of exhaust flowing into the DPF 32 is kept high, and the DPF regeneration process is executed with high efficiency. In this way, according to the present embodiment, it is possible to execute the DPF regeneration process and the SOx regeneration process simultaneously with high efficiency. Therefore, the time required in these processes is shortened, which can improve fuel economy, whereby degradation to the DPF 32 and the NOx purification catalyst 33 can also be reduced.

In addition, by providing the fuel reformer 50B to be separate from the exhaust plumbing 4, reductive gas can be supplied without increasing the heat capacity upstream of the NOx purification catalyst 33. This enables the SOx regeneration process to be executed without reducing the NOx purification performance when at low temperature such as immediately after startup of the engine 1.

Moreover, by providing the fuel reformer that produces reductive gas to be separate from the exhaust channel, the execution time period of the SOx regeneration process can be decided independently of the state of the internal combustion engine. Therefore, the SOx regeneration process can be suitable executed as needed while always controlling the engine 1 to an optimal state. In addition, by providing the fuel reformer 50B to be separate from the exhaust plumbing 4, reductive gas can always be produced at optimum efficiency and this reductive gas can be supplied into the exhaust plumbing 4, irrespective of the operating state of the engine 1, the oxygen concentration or steam concentration of the exhaust, etc.

On the other hand, in a case of providing the fuel reformer 50B inside the exhaust plumbing 4, it is necessary to enlarge the fuel reformer 50B so as to be able to operate without influencing the components, temperature, and flow rate of the exhaust; however, according to the present embodiment, it is possible to perform operation stably without enlarging the device by providing the fuel reformer 50B to be separate from the exhaust plumbing 4. In addition, by providing the fuel reformer 50B to be separate from the exhaust plumbing 4, it becomes possible to activate the reforming catalyst 53 at an early stage by performing control of an independent system from the control of the engine 1.

In addition, according to the present embodiment, more carbon monoxide than hydrogen is contained in the reductive gas by volume ratio. Moreover, the temperature at which carbon monoxide begins to combust on the catalyst is a temperature lower than the temperature at which hydrogen begins to combust. The NOx purification catalyst 33 is quickly raised in temperature by supplying such a reductive gas containing carbon monoxide, and thus the purification of SOx can be promoted in the SOx regeneration process. In addition, reductive gas thus produced can be supplied into the exhaust plumbing 4 without adding an extra device by producing reductive gas of a pressure higher than atmospheric.

Moreover, according to the present embodiment, reductive gas of a temperature higher than the temperature of exhaust flowing through the exhaust plumbing 4 at the inlet 14B is supplied. This enables the NOx purification catalyst 33 to be quickly raised in temperature, and thus the purification of SOx to be promoted in the SOx regeneration process.

In addition, according to the present embodiment, the normal regeneration operation that performs the DPF regeneration process and the simultaneous regeneration operation that supplies reductive gas and performs the SOx regeneration process while executing this normal regeneration operation are selectively executed according to predetermined conditions. This enables these regeneration processes to be efficiently executed while minimizing consumption of reductive gas, by executing the normal regeneration operation in a case of only performing the DPF regeneration process being necessary, and executing the simultaneous regeneration operation in a case in which performing the DPF regeneration process and the SOx regeneration process simultaneously is preferable.

Moreover, according to the present embodiment, the temperature of the exhaust is controlled by adjusting the intake air amount when executing the normal regeneration operation. This enables the temperature of the exhaust to be controlled to a required temperature in order for the PM to be made to combust, and the DPF regeneration process to be performed efficiently.

Furthermore, according to the present embodiment, when providing the catalytic converter 31 having an oxidative function on an upstream side of the DPF 32, post injection is executed when executing the normal regeneration operation. With this, the temperature of the exhaust flowing into the DPF 32 can be raised and thus the DPF regeneration process can be performed with high efficiency, by causing fuel supplied by way of post injection to combust by way of the catalytic converter 31 when executing the normal regeneration operation.

In addition, according to the present embodiment, in a case of the PM deposition amount QPM having become at least the first threshold value QPMATH, the normal regeneration execution request flag FDPFRP is set to 1, and the normal regeneration operation or simultaneous regeneration operation is executed. This enables the DPF regeneration process to be executed at a suitable opportunity prior to the PM deposition amount reaching the limit.

Moreover, according to the present embodiment, the simultaneous regeneration execution request flag FSIMRP is set to 1, and the simultaneous regeneration operation is executed in response to the temperature TLNC of the NOx purification catalyst 33 being at least the predetermined temperature judgment value TLNCTH and the SOx poisoning amount QSO of the NOx purification catalyst 33 having become at least the first threshold value QSOATH. This enables the SOx regeneration process to be performed at an opportunity before the NOx purification performance of the NOx purification catalyst 33 declines drastically. Furthermore, SOx desorbed from the NOx purification catalyst 33 can be purified with good efficiency by executing the simultaneous regeneration operation in a case in which the temperature TLNC of the NOx purification catalyst is at least the predetermined temperature judgment value TLNCTH.

In addition, according to the present embodiment, the simultaneous regeneration end request flag FSIMRE is set to 1 in response to the SOx poisoning amount QSO having become less than the predetermined second threshold value SQOBTH, then execution of the simultaneous regeneration operation ends, and the normal regeneration operation is executed. This enables execution of the simultaneous regeneration operation to end according to recovery of the NOx purification performance of the NOx purification catalyst, and the DPF regeneration process to continue.

Moreover, according to the present embodiment, the supply amount of reductive gas is controlled according to the exhaust air/fuel ratio AFB in a vicinity of the NOx purification catalyst 33. This enables the exhaust air/fuel ratio of exhaust flowing into the NOx purification catalyst 33 to be adjusted appropriately, and thus the efficiency of the SOx regeneration process to be further improved.

Furthermore, according to the present embodiment, the fuel reformer 50B can be made a smaller size by producing reductive gas by way of a partial oxidation reaction. In order words, this is because a device to supply extra energy from outside does not need to be provided since the partial oxidation reaction as described above is an exothermic reaction, and once the reaction starts, the reaction progresses spontaneously. In addition, there is also no need to also provide a converter and system for concentrating hydrogen of a shift reaction, etc. Moreover, the light-off time of the fuel reformer 50B can be shortened by making the fuel reformer 50B to be small in this way. Therefore, reductive gas can be quickly supplied into the exhaust plumbing 4 as needed.

Furthermore, by introducing light hydrocarbons generated secondarily in this partial oxidation reaction to the NOx purification catalyst 33 along with carbon monoxide and hydrogen, it can also be used in the purification of SOx.

In the present embodiment, the ECU 40B configures the regeneration means, exhaust temperature control means, deposition amount estimation means, a portion of the SOx poisoning amount estimation means, a portion of the catalyst temperature estimation means, and the supply amount control means. More specifically, the means related to Steps S31 to S39 of FIG. 7 correspond to the regeneration means, the means related to Step S32 correspond to the exhaust temperature control means, the ECU 40B and the differential pressure sensor 27 correspond to the deposition amount estimation means, the ECU 40B and the NOx sensor 28 correspond to the SOx poisoning amount estimation means, the ECU 40B and the exhaust temperature sensor 26B correspond to the catalyst temperature estimation means, and the means related to Step S35 of FIG. 7 correspond to the supply amount control means.

It should be noted that, in the aforementioned embodiment, various modifications thereto are possible, within the scope of the claims.

For example, in the above-mentioned embodiment, although the catalytic converter 31 having an oxidative function of continuously oxidizing reductive gas was provided in the exhaust plumbing 4 on an upstream side of the DPF 32, it is not limited thereto. For example, a catalyst having a similar oxidative function may be supported on the DPF, without providing a catalytic converter separately from the DPF. In addition to effects similar to the above-mentioned embodiment, this enables the exhaust emission control device to be made compact, and can promote the combustion reaction of PM. Therefore, the efficiency of the DPF regeneration process can be further improved.

In addition, in the above-mentioned embodiment, although the intake air amount was adjusted in Step S32 of FIG. 7, it is not limited thereto, and the boost pressure may be adjusted, for example. This enables effects similar to the above-mentioned embodiment to be exerted.

It should be noted that the present invention is not to be limited to the aforementioned first to third embodiments, and various modifications thereto are possible, within the scope of the claims.

For example, in the above-mentioned first to third embodiments, although an example is shown in which the present invention is applied to a diesel internal combustion engine, the present invention can also be applied to a gasoline internal combustion engine. In addition, the present invention can be applied to an exhaust emission control device of an engine for nautical propulsion such as an outboard engine in which the crank shaft is arranged vertically, or the like.

## Claims

1. An exhaust emission control device for an internal combustion engine (1) including a particulate filter (32) that is provided in an exhaust channel (4, 5) of the internal combustion engine (1), and collects particulates in exhaust, the device comprising:
a fuel reformer (50) that is provided separately from the exhaust channel (4, 5), produces a reducing gas containing hydrogen and carbon monoxide by reforming fuel, and supplies the reducing gas from an inlet (14) provided in the exhaust channel (4, 5) upstream of the particulate filter (32) into the exhaust channel (4, 5);
a catalytic converter (31) that is provided in the exhaust channel (4, 5) between the inlet (14) and the particulate filter (32), and continuously oxidizes the reducing gas;
a regeneration means (50) for executing a regeneration process to cause particulates collected in the particulate filter (32) to be combusted while supplying reducing gas from the fuel reformer (50) into the exhaust channel (4, 5); and
a target concentration setting means (40) for setting an oxygen concentration target value (AFTV) of exhaust flowing into the particulate filter while executing the regeneration process by way of the regeneration means (40),
**characterized in that** the device further comprises:
an oxygen concentration control means (40) for controlling the oxygen concentration target value (AF) of exhaust so as to match the oxygen concentration target value (AFTV) thus set by the oxygen concentration setting means (40), by adjusting a supply amount of reducing gas from the fuel reformer (50) and
wherein the target concentration setting means (40) sets the oxygen concentration target value (AFTV) to be low in a case of internal combustion engine (1) entering an idle operating state or a deceleration operating state while executing the regeneration process.

2. An exhaust emission control device for an internal combustion engine (1) including a particulate filter (32) that is provided in an exhaust channel (4, 5) of the internal combustion engine (1), and collects particulates in exhaust, the device comprising:
a fuel reformer (50) that is provided separately from the exhaust channel (4, 5), produces a reducing gas containing hydrogen and carbon monoxide by reforming fuel, and supplies the reducing gas from an inlet (14) provided in the exhaust channel (4, 5) upstream of the particulate filter (32) into the exhaust channel (4, 5);
a regeneration means (40) for executing a regeneration process to cause particulates collected in the particulate filter (32) to be combusted while supplying reducing gas from the fuel reformer (50) into the exhaust channel (4, 5),
wherein a catalyst having an oxidative function of continuously oxidizing reducing gas is supported on the particulate filter (32); and
a target concentration setting means (40) for setting an oxygen concentration target value (AFTV) of exhaust flowing into the particulate filter while executing the regeneration process by way of the regeneration means (40),
**characterized in that** the device further comprises:
an oxygen concentration control means (40) for controlling the oxygen concentration target value (AF) of exhaust so as to match the oxygen concentration target value (AFTV) thus set by the oxygen concentration setting means (40), by adjusting a supply amount of reducing gas from the fuel reformer (50), and
wherein the target concentration setting means (40) sets the oxygen concentration target value (AFTV) to be low in a case of the internal combustion engine (1) entering an idle operating state or a deceleration operating state while executing the regeneration process.

3. An exhaust emission control device for an internal combustion engine (1) according to claim 1, wherein the catalytic converter (31) contains at least one selected from the group consisting of platinum, palladium, and rhodium.

4. An exhaust emission control device for an internal combustion engine (1) according to claim 2, wherein the catalyst having the oxidative function contains at least one selected from the group consisting of palladium, rhodium, platinum, silver, and gold.

5. An exhaust emission control device for an internal combustion engine (1) according to any one of claims 1 to 4, further comprising an oxygen concentration detection means (23) for detecting or estimating an oxygen concentration (AF) of exhaust in the exhaust channel (4, 5) flowing into the particulate filter (32).

6. An exhaust emission control device for an internal combustion engine (1) according to any one of claims 1 to 5, wherein the reducing gas produced by the fuel reformer (50) contains more carbon monoxide than hydrogen.

7. An exhaust emission control device for an internal combustion engine (1) according to any one of claims 1 to 6, wherein a temperature of the reducing gas supplied by the fuel reformer (50) is higher than a temperature of exhaust flowing through the exhaust channel (4, 5) at the inlet (14).

8. An exhaust emission control device for an internal combustion engine (1) according to any one of claims 1 to 7, wherein the target concentration setting means (40) sets the oxygen concentration target value (AFTV) based on at least one among a flow rate (GE) of exhaust flowing through the exhaust channel (4, 5), a temperature (TE) of the exhaust, and a deposition amount (1QPM) of particulates deposited on the particulate filter (32).

9. An exhaust emission control device for an internal combustion engine (1) according to any one of claims 1 to 8, wherein the fuel reformer (50) produces reducing gas with carbon monoxide as a main component by way of a partial oxidation reaction of hydrocarbon fuel and air.

## Patentansprüche

1. Abgasemissionssteuerungsvorrichtung für einen Verbrennungsmotor (1), die einen Partikelfilter (32) enthält, der in einem Abgaskanal (4, 5) des Verbrennungsmotors (1) vorgesehen ist und Partikel im Abgas sammelt, wobei die Vorrichtung umfasst:
einen Kraftstoffreformer (50), der separat von dem Abgaskanal (4, 5) vorgesehen ist, durch Kraftstoffreformierung Wasserstoff und Kohlenmonoxid enthaltendes Reduktionsgas erzeugt und das Reduktionsgas von einem Einlass (14), der in dem Abgaskanal (4, 5) stromauf des Partikelfilters (32) vorgesehen ist, in den Abgaskanal (4, 5) leitet;
einen katalytischen Wandler (31), der in dem Abgaskanal (4,5) zwischen dem Einlass (14) und dem Partikelfilter (32) vorgesehen ist und kontinuierlich das Reduktionsgas oxidiert;
ein Regenerationsmittel (40) zum Ausführen eines Regenerationsprozesses, um zu bewirken, dass in dem Partikelfilter (32) angesammelte Partikel verbrannt werden, während Reduktionsgas von dem Kraftstoffreformer (50) in den Abgaskanal (4, 5) geleitet wird; und
ein Soll-Konzentrationssetzmittel (40) zum Setzen eines Sauerstoffkonzentrations-Sollwerts (AFTV) von Abgas, das in den Partikelfilter fließt, während der Regenerationsprozess mittels des Regenerationsmittels (40) ausgeführt wird,
**dadurch gekennzeichnet, dass** die Vorrichtung ferner umfasst:
ein Sauerstoffkonzentrationssteuermittel (40) zum Steuern/Regeln des Sauerstoffkonzentrationswerts (AF) von Abgas zur Anpassung an den so vom Sauerstoffkonzentrationssetzmittel (40) gesetzten Sauerstoffkonzentration-Sollwert (AFTV) durch Einstellung einer Zufuhrmenge des Reduktionsgases von dem Kraftstoffreformer (50),
und
worin das Soll-Konzentrationssetzmittel (40) den Sauerstoffkonzentration-Sollwert (AFTV) niedrig setzt, falls der Verbrennungsmotor (1) in einem Leerlaufbetriebszustand oder einem Verzögerungsbetriebszustand eintritt, während der Regenerationsprozess ausgeführt wird.

2. Abgasemissionssteuerungsvorrichtung für einen Verbrennungsmotor (1), die einen Partikelfilter (32) enthält, der in einem Abgaskanal (4, 5) des Verbrennungsmotors (1) vorgesehen ist und Partikel im Abgas sammelt, wobei die Vorrichtung umfasst:
einen Kraftstoffreformer (50), der separat von dem Abgaskanal (4, 5) vorgesehen ist, durch Kraftstoffreformierung Wasserstoff und
Kohlenmonoxid enthaltendes Reduktionsgas erzeugt, und das Reduktionsgas von einem Einlass (14), der in dem Abgaskanal (4, 5) stromauf des Partikelfilters (32) vorgesehen ist, in den Abgaskanal (4, 5) leitet;
ein Regenerationsmittel (40) zum Ausführen eines Regenerationsprozesses, um zu bewirken, dass in dem Partikelfilter (32) angesammelte Partikel verbrannt werden, während Reduktionsgas von dem Kraftstoffreformer (50) in den Abgaskanal (4, 5) geleitet wird,
worin ein Katalysator, der eine Oxidationsfunktion zum kontinuierlichen Oxidieren von Reduktionsgas hat, an dem Partikelfilter (32) getragen ist; und
ein Soll-Konzentrationssetzmittel (40) zum Setzen eines Sauerstoffkonzentrations-Sollwerts (AFTV) von Abgas, das in den Partikelfilter fließt, während der Regenerationsprozess mittels des Regenerationsmittels (40) ausgeführt wird,
**dadurch gekennzeichnet, dass** die Vorrichtung ferner umfasst:
ein Sauerstoffkonzentrationssteuermittel (40) zum Steuern/Regeln des Sauerstoffkonzentrationswerts (AF) von Abgas zur Anpassung an den so vom Sauerstoffkonzentrationssetzmittel (40) gesetzten Sauerstoffkonzentration-Sollwert (AFTV) durch Einstellung einer Zufuhrmenge des Reduktionsgases von dem Kraftstoffreformer (50), und
worin das Soll-Konzentrationssetzmittel (40) den Sauerstoffkonzentration-Sollwert (AFTV) niedrig setzt, falls der Verbrennungsmotor (1) in einem Leerlaufbetriebszustand oder einem Verzögerungsbetriebszustand eintritt, während der Regenerationsprozess ausgeführt wird.

3. Abgasemissionssteuerungsvorrichtung für einen Verbrennungsmotor (1) nach Anspruch 1, worin der katalytische Wandler (31) zumindest eines enthält, das aus der Gruppe ausgewählt ist, die aus Platin, Palladium und Rhodium besteht.

4. Abgasemissionssteuerungsvorrichtung für einen Verbrennungsmotor (1) nach Anspruch 2, worin der Katalysator mit der Oxidationsfunktion zumindest eines enthält, das aus der Gruppe ausgewählt, die aus Palladium, Rhodium, Platin, Silber und Gold besteht.

5. Abgasemissionssteuerungsvorrichtung für einen Verbrennungsmotor (1) nach einem der Ansprüche 1 bis 4, die ferner ein Sauerstoffkonzentrationserfassungsmittel (23) zum Erfassen oder Schätzen einer Sauerstoffkonzentration (AF) von in den Partikelfilter (32) fließendem Abgas in dem Abgaskanal (4, 5) aufweist.

6. Abgasemissionssteuerungsvorrichtung für einen Verbrennungsmotor (1) nach einem der Ansprüche 1 bis 5, worin das vom Kraftstoffreformer (50) erzeugte Reduktionsgas mehr Kohlenmonoxid als Wasserstoff enthält.

7. Abgasemissionssteuerungsvorrichtung für einen Verbrennungsmotor (1) nach einem der Ansprüche 1 bis 6, worin eine Temperatur des dem Kraftstoffreformer (50) zugeführten Reduktionsgases höher ist als eine Temperatur des durch den Abgaskanal (4, 5) am Einlass (14) fließenden Abgases.

8. Abgasemissionssteuerungsvorrichtung für einen Verbrennungsmotor (1) nach einem der Ansprüche 1 bis 7, worin das Soll-Konzentrationssetzmittel (40) den Sauerstoffkonzentration-Sollwert (AFTV) basierend auf zumindest einer unter einer Strömungsrate (GE) des durch den Abgaskanal (4, 5) fließenden Abgases, einer Temperatur (TE) des Abgases und einer Ablagerungsmenge (1 QPM) von Partikeln, die sich auf dem Partikelfilter (32) abgelagert hat, setzt.

9. Abgasemissionssteuerungsvorrichtung für einen Verbrennungsmotor (1) nach einem der Ansprüche 1 bis 8, worin der Kraftstoffreformer (50) Reduktionsgas mit Kohlenmonoxid als Hauptkomponente durch eine partielle Oxidationsreaktion von Kohlenwasserstoff-Kraftstoff und Luft erzeugt.

## Revendications

1. Un dispositif de réduction des émissions de gaz d'échappement pour un moteur à combustion interne (1) comprenant un filtre à particules (32) qui est disposé dans un canal d'échappement (4, 5) du moteur à combustion interne (1) et recueille les particules dans les gaz d'échappement, le dispositif comprenant :
un reformeur de carburant (50) qui est prévu séparément du canal d'échappement (4, 5), produit un gaz réducteur contenant de l'hydrogène et du monoxyde de carbone en reformant le carburant et fournit le gaz réducteur d'une admission (14) prévue dans le canal d'échappement (4, 5) en amont du filtre à particules (32) dans le canal d'échappement (4, 5) ;
un convertisseur catalytique (31) qui est disposé dans le canal d'échappement (4, 5) entre l'admission (14) et le filtre à particules (32) et oxyde en continu le gaz réducteur ;
des moyens de régénération (50) pour exécuter un procédé de régénération afin d'amener les particules recueillies dans le filtre à particules (32) à subir une combustion tout en amenant le gaz réducteur du reformeur de carburant (50) dans le canal d'échappement (4, 5) ; et
des moyens de réglage de la concentration cible (40) pour régler une valeur cible de concentration d'oxygène (AFTV) des gaz d'échappement circulant dans le filtre à particules tout en exécutant le procédé de régénération à l'aide des moyens de régénération (40),
**caractérisé en ce que** le dispositif comprend par ailleurs :
des moyens de régulation de la concentration d'oxygène (40) pour réguler la valeur cible de la concentration d'oxygène (AF) des gaz d'échappement de manière à l'adapter à la valeur cible de la concentration d'oxygène (AFTV) ainsi réglée par les moyens de réglage de la concentration d'oxygène (40) par ajustement d'une quantité amenée de gaz réducteur du reformeur de carburant (50) et
dans lequel les moyens de réglage de la concentration cible (40) règlent la valeur cible de concentration d'oxygène (AFTV) pour être faible en cas de moteur à combustion interne (1) qui passe en mode ralenti ou dans un état de fonctionnement en décélération tout en exécutant le procédé de régénération.

2. Un dispositif de réduction des émissions de gaz d'échappement pour un moteur à combustion interne (1) comprenant un filtre à particules (32) qui est disposé dans un canal d'échappement (4, 5) du moteur à combustion interne (1) et recueille les particules dans les gaz d'échappement, le dispositif comprenant :
un reformeur de carburant (50) qui est prévu séparément du canal d'échappement (4, 5), produit un gaz réducteur contenant de l'hydrogène et du monoxyde de carbone en reformant le carburant et fournit le gaz réducteur d'une admission (14) prévue dans le canal d'échappement (4, 5) en amont du filtre à particules (32) dans le canal d'échappement (4, 5) ;
des moyens de régénération (40) pour exécuter un procédé de régénération afin d'amener les particules recueillies dans le filtre à particules (32) à subir une combustion tout en amenant le gaz réducteur du reformeur de carburant (50) dans le canal d'échappement (4, 5) ; et
dans lequel un catalyseur possédant une fonction oxydative d'oxydation continue du gaz réducteur est soutenu sur le filtre à particules (32) ; et
des moyens de réglage de la concentration cible (40) pour régler une valeur cible de concentration d'oxygène (AFTV) des gaz d'échappement circulant dans le filtre à particules tout en exécutant le procédé de régénération à l'aide des moyens de régénération (40),
**caractérisé en ce que** le dispositif comprend par ailleurs :
des moyens de régulation de la concentration d'oxygène (40) pour réguler la valeur cible de la concentration d'oxygène (AF) des gaz d'échappement de manière à l'adapter à la valeur cible de la concentration d'oxygène (AFTV) ainsi réglée par les moyens de réglage de la concentration d'oxygène (40) par ajustement d'une quantité amenée de gaz réducteur du reformeur de carburant (50) et
dans lequel les moyens de réglage de la concentration cible (40) règlent la valeur cible de concentration d'oxygène (AFTV) pour être faible en cas de moteur à combustion interne (1) qui passe en mode ralenti ou dans un état de fonctionnement en décélération tout en exécutant le procédé de régénération.

3. Un dispositif de réduction des émissions de gaz d'échappement pour un moteur à combustion interne (1) selon la revendication 1, dans lequel le convertisseur catalytique (31) contient au moins un élément sélectionné à partir du groupe composé du platine, du palladium et du rhodium.

4. Un dispositif de réduction des émissions de gaz d'échappement pour un moteur à combustion interne (1) selon la revendication 2, dans lequel le catalyseur possédant la fonction oxydative contient au moins un élément sélectionné à partir du groupe composé du palladium, du rhodium, du platine, de l'argent et de l'or.

5. Un dispositif de réduction des émissions de gaz d'échappement pour un moteur à combustion interne (1) selon l'une des revendications 1 à 4, comprenant par ailleurs des moyens de détection de la concentration d'oxygène (23) pour détecter ou estimer une concentration d'oxygène (AF) des gaz d'échappement dans le canal d'échappement (4, 5) circulant dans le filtre à particules (32).

6. Un dispositif de réduction des émissions de gaz d'échappement pour un moteur à combustion interne (1) selon l'une des revendications 1 à 5, dans lequel le gaz réducteur produit par le reformeur de carburant (50) contient plus de monoxyde de carbone que d'hydrogène.

7. Un dispositif de réduction des émissions de gaz d'échappement pour un moteur à combustion interne (1) selon l'une des revendications 1 à 6, dans lequel une température du gaz réducteur amené par le reformeur de carburant (50) est supérieure à une température des gaz d'échappement circulant par le canal d'échappement (4, 5) à hauteur de l'admission (14).

8. Un dispositif de réduction des émissions de gaz d'échappement pour un moteur à combustion interne (1) selon l'une des revendications 1 à 7, dans lequel les moyens de réglage de la concentration cible (40) règlent la valeur cible de la concentration d'oxygène (AFTV) basée sur au moins un paramètre parmi un débit (GE) des gaz d'échappement circulant par le canal d'échappement (4, 5), une température (TE) des gaz d'échappement et une quantité déposée (1QPM) des particules déposées sur le filtre à particules (32).

9. Un dispositif de réduction des émissions de gaz d'échappement pour un moteur à combustion interne (1) selon l'une des revendications 1 à 8, dans lequel le reformeur de carburant (50) produit un gaz réducteur avec du monoxyde de carbone comme composant principal par une réaction d'oxydation partielle du carburant hydrocarburé et de l'air.
